# EUROPÄISCHE PATENTSCHRIFT

(11) **EP 1 619 072 B1**
(45) Veröffentlichungstag und Bekanntmachung des Hinweises auf die Patenterteilung: **05.05.2010**
(21) Anmeldenummer: 05405400.2
(22) Anmeldetag: 23.06.2005
(51) Int. Cl.: B60N 2/64

(54) **Lehne**
Backrest
Dossier

(30) Priorität: 06.07.2004 DE 102004032765; 02.12.2004 DE 202004018712 U; 16.02.2005 CH 2772005
(43) Veröffentlichungstag der Anmeldung: 25.01.2006
(73) Patentinhaber: Eysing, Volker Wilhelm, 24116 Kiel (DE); Samas GmbH & Co. KG, 67547 Worms (DE)
(72) Erfinder: Eysing, Volker Wilhelm, 24116 Kiel (DE)
(74) Vertreter: Walder, Martin Bernhard

(56) Entgegenhaltungen:
- EP-A2- 1 316 651
- WO-A-96/39067
- US-A1- 2003 127 896

## Beschreibung

Die Erfindung betrifft eine Lehne, z.B. einer Sitzlehne für Fahrzeugsitze, also PKW-, LKW-, Bahn- und Flugzeugsitze oder einer Lehne eines Stuhls, insbesondere eines Bürostuhls.

Rückenlehnen sind in grosser Vielzahl bekannt. Die meisten sind in sich steif. Eine harte Schale ist lediglich mit einer auf der Sitzseite vorgesehenen Polsterung versehen.

Ein ergonomisches Sitzen erfordert jedoch ein flexibles Nachgeben entsprechend der jeweils an das Stützelement angelehnten Körperform. Es erfordert insbesondere auf Grund der unterschiedlichen Grössen und Sitzpositionen ein flexibles Nachgeben entsprechend der an die Lehne angelehnten Rückenform sowie eine permanente Unterstützung des Beckenrands, um ein Abkippen des Beckens nach hinten zu verhindern.

Die WO 96/39067 offenbart eine Rückenlehne mit Querlatten, die auf beiden Seiten einzeln verschwenkbar paarweise an Hebeln erster Stufe angeordnet sind, welche Hebel eine Art Waage für die beiden Querlatten bilden. Diese Hebel erster Stufe sind paarweise wieder an Hebeln zweiter Stufe angeordnet und einzeln gegenüber diesen verschwenkbar. Diese Hebel zweiter Stufe bildet wieder eine Art Waage für die an den Hebeln zweiter Stufe angeordneten Lattenpaare. Die Hierarchie weitertreibend sind diese Hebel zweiter Stufe wiederum paarweise an zwei Hebeln dritter Stufe angeordnet und einzeln an diesen angelenkt. Diese Hebel dritter Stufe bilden wieder eine Art Waage für die Hebelpaare zweiter Stufe und die daran angelenkten Lattenpaar-Paare. Dies führt dazu, dass durch Verschwenken der Latten und Hebel sich ein Gleichgewicht der Lasten einstellt.

Bei diesem Verschwenken verändert sich der Abstand zwischen den auf einer Vorderseite der Sitzfläche als Zugelemente ausgebildeten Querlatten und den auf der Rückseite der Sitzfläche als Druckelemente ausgebildeten Hebeln deutlich.

Bei einem Beispiel sind die Querlatten untereinander gelenkig verbunden. Die Abstände zwischen den Anlenkpunkten der Querlatten an den Hebeln sind veränderlich, dank dem die Hebel als federnde Spangen ausgebildet sind. Bei diesem Stand der Technik verändert sich unter Last der Abstand zwischen den Druckelementen und den Zugelementen, weil die Hebel verschwenkbar sind. Dank dem die Hebel sich im Wesentlichen in Erstreckungsrichtung ausdehnen sind die Druck- und Zugelemente in Erstreckungsrichtung weitgehend unverschieblich gegenüber einander.

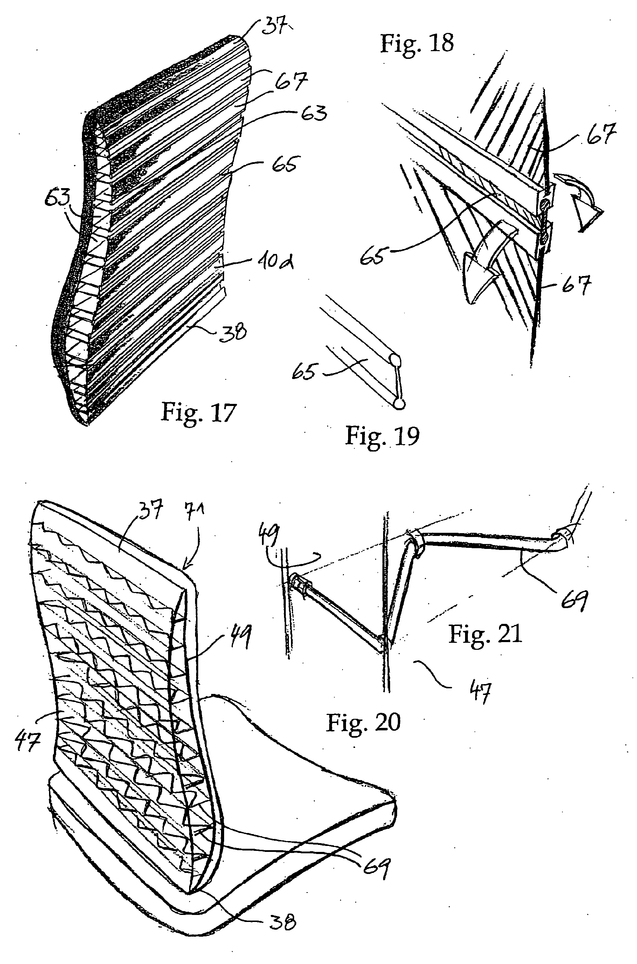

Aus der unklaren Offenbarung der EP-A-1040999, welche auf der ebenfalls unklaren DE -A-199 16 411 basiert, ist ein Bauteil zur Aufnahme von Kräften bekannt, welches Bauteil in Längsrichtung ein stumpfes und ein spitzes Ende und eine flexible Aussenhaut besitzt, welche auf zwei Seiten das Bauteil vom stumpfen bis zum spitzen Ende abdeckt. Am stumpfen Ende ist das Bauteil zu befestigen, während das spitze Ende frei auskragen soll. Die Aussenhaut bildet auf der Unterseite und der Oberseite des Bauteils eine zusammenhängende, einstückige Einheit. Unterseite und Oberseite sind durch Querstreben miteinander verbunden. An der Innenseite der Aussenhaut sind Verbindungsmittel zu den Querstreben ausgebildet. In diesen Verbindungsmitteln sind die Querstreben anscharniert. Dank den parallel ausgerichteten Querstreben ist die flexible und formhaltige Aussenhaut zu einem verformbaren Profil gehalten. Diese Struktur des Bauteils gewährleistet, dass es entgegen einer auf die Aussenhaut einwirkenden Kraft auslenkt. Es wird in dieser Schrift angeregt, dass ein solches Bauteil in Stuhllehnen oder Sitzflächen verbaut werden könne. Durch Verbindung von zwei Gerüsten (mit Gerüst sollte eventuell ein solches Bauteil bezeichnet werden), deren stumpfe Enden über eine Achswelle miteinander verbunden sind, entstehe ein Stuhl, der in der Lage sei, eine Person aufzunehmen und sich der Anatomie der Person anzupassen. In der Figur 20, welche als einzige Figur einen Stuhl darstellt, sind ein Sitzpolster und eine Rückenlehne darstellt, welche beide mit der Bezugsziffer für ein Bauteil bezeichnet sind. Diese beiden Bauteile sind um eine gemeinsame Achse angelenkt und scheinbar mit einer Feder elastisch in einer Relativposition zueinander gehalten.

Dieses Stuhlkonzept wurde in der US-A- 2004/0183348 weiterentwickelt. Aus dieser Schrift ist ein dem oben beschriebenen Bauteil entsprechendes Stützelement bekannt, das ein Skelett besitzt, welches Skelett eine Haut aufweist, an der eine Vielzahl von Rippen angelenkt sind. Die Haut bildet eine flexible Tragfläche zum Stützen einer Sitzkraft, welche durch einen Körper auf die Haut ausgeübt wird. Dieses Skelett wirkt so zusammen, dass es aufgrund der Sitzkraft zumindest teilweise entgegen der Richtung der Sitzkraft verformt wird. Das Skelett weist zudem wenigstens ein Federelement auf, welches Haut und/ oder Rippen miteinander verbindet, oder die Haut bildet einstückig eine Rückenlehne und eine Sitzfläche. Die Federkraft des Federelements bewirkt insbesondere eine Anpassung der Form des Stützelements. Für diesen Zweck ist das Federelement in einer Diagonale des Rechteckes angeordnet, welches aus zwei Rippen und der an beiden Enden der Rippen angeordneten Haut gebildet ist.

Solche Stuhllehnen weisen den Vorteil auf, dass sich die Rückenlehne der Form der Brustwirbelsäule mit einer konkaven Verformung anpasst und diese an jeder Stelle gleichermassen stützt. Die Anpassung im konkaven Bereich der Rückenlehne geschieht aufgrund der Form des abgestützten Rückens und den von diesem auf die Rückenlehne ausgeübten Kräften. Ein Nachteil dieser Stuhllehnen ist aber, dass die konvexe Verformung im Lendenbereich sich aus der Geometrie der Stützstruktur und der Verformung im Brustwirbelsäulenbereich zwingend ergibt.

Die Erfindung hat sich zur Aufgabe gesetzt, eine sich einer angelehnten Rückenform nachgebend anpassende Lehne zu schaffen. Eine bevorzugte Aüsführung der Erfindung soll eine gute Abstützung insbesondere im Lumbalbereich und Beckenrandbereich schaffen.

Erfindungsgemäss wird dies durch eine Rückenlehne, bzw. einen Stuhl oder Fahrzeugsitz mit einer Rückenlehne mit den Merkmalen der unabhängigen Ansprüche gelöst. Die abhängigen Ansprüche geben vorteilhafte Ausführungsformen der Erfindung wieder.

Eine gattungsgemässe Rückenlehne besitzt eine Stützfläche und wenigstens eine mit der Stützfläche verbundene oder die Stützfläche bildende Struktur. Diese Struktur erstreckt sich in Richtung der Höhe der Rückenlehne von einem ersten Endbereich der Stützfläche zu einem zweiten Endbereich der Stützfläche und weist vorderseitig ein Zugelement und rückseitig ein Druckelement auf. Das Zugelement verbindet den ersten Endbereich der Stützfläche mit dem zweiten Endbereich der Stützfläche Zugkräfte übertragend. Das Druckelement ist zwischen dem ersten und dem zweiten Endbereich in einem Abstand zum Zugelement angeordnet und kann Druckkräfte aufnehmen. Das Druckelement ist im ersten Endbereich der Stützfläche in Erstreckungsrichtung unverschieblich mit dem Zugelement verbunden. Das Zugelement und das Druckelement sind zwischen den Endbereichen vermittels den Abstand haltenden Abstandmitteln in Erstreckungsrichtung gegeneinander verschieblich miteinander verbunden. Dank dieser Ausbildung der Struktur müssen eine Verbiegung des Zugelements und des Druckelements um quer zur Erstreckungsrichtung liegende Biegeachsen und eine Verschiebung des Zugelements gegenüber dem Druckelement gleichzeitig auftreten. Dadurch ergibt sich eine Anpassung der Rückenlehne entlang einer daran anlehnenden Rückenform. Zuerst belastete Bereiche der Stützfläche geben nach hinten zurückweichend nach. Infolge der Verformung von Zugelement und Druckelement werden oben und unten benachbarte Bereiche des zuerst belasteten Bereichs aktiv relativ zum zuerst belasteten Bereich nach vorne bewegt und legen sich sofort an die Rückenform an. Liegt die gesamte Stützfläche am Rücken an, so ist diese strukturbedingte Anpassung abgeschlossen und die Rückenlehne kann lediglich noch aufgrund ihrer Elastizität nachgeben. Eine solche gattungsgemässe Rückenlehne weist wenigstens ein Befestigungselement, insbesondere eine Tragachse auf, mit welcher oder welchen sie an einen Lehnenträger befestigbar oder angeordnet ist, insbesondere anlenkbar oder angelenkt ist.

Die Aufgabe der Erfindung wird bei einer solchen Rückenlehne dadurch gelöst, dass das Druckelement im zweiten Endbereich der Stützfläche in Erstreckungsrichtung ebenfalls unverschieblich mit dem Zugelement verbunden ist, und das Befestigungselement mit Abstand zum ersten und zum zweiten Endbereich der Stützfläche zwischen diesen Endbereichen angeordnet ist. Die Rückenlehne besitzt dadurch zwei vom Befestigungselement sich ausstreckende Stützbereiche: Einen oberen zwischen dem Befestigungselement und dem ersten Endbereich der Stützfläche; und einen unteren zwischen dem Befestigungselement und dem zweiten Endbereich der Stützfläche. Diese Stützbereiche passen sich dem Rücken an und sind gegebenenfalls um die Tragachse verschwenkbar, so dass Druck auf den oberen Stützbereich den unteren Stützbereich an den Rücken presst. Die Ausbildung der Lendenwölbung ergibt sich aus dem Zusammenspiel der Verformung des oberen und des unteren Stützbereichs. Daher ist die Abstützung im Bereich der Brustwirbelsäule und die Abstützung im Bereich des Beckenrandes miteinander verbunden.

Vorteilhaft ist das Befestigungselement derart mit dem Zugelement und/oder Druckelement verbunden, dass diese Verbindung eine Verschiebung des Zugelements gegenüber dem Druckelement im Bereich der Tragachse zulässt, oder ist eine Verschenkbarkeit der Rückenlehne um die Tragachse gegeben. Dadurch ergibt sich ein dynamisches Zusammenspiel der Verformungen des oberen und des unteren Stützbereichs. Die Verformung des einen Stützbereichs bewirkt eine Verformung des anderen Stützbereichs. Die entgegen der verformenden Kraft gerichtete Verformung der Struktur in dem einen Stützbereich wirkt sich die Tragachse übergreifend auf den anderen Stützbereich aus. Die Verschiebbarkeit im Bereich des Befestigungselements bedeutet unabhängig davon, ob eine Verschwenkbarkeit um eine Tragachse gegeben ist oder nicht, dass ein sich nach hinten Strecken in der Brustwirbelsäule zu einem Strecken des oberen Stützbereichs und damit zu einem Krümmen des unteren Stützbereichs und Andrücken des unteren Endbereiches gegen das Becken führt.

Die Stützfläche ist zweckmässigerweise unterhalb ihrer vertikalen Mitte und oberhalb des unteren, zweiten Endbereichs gelagert, und zwar z.B. um eine horizontale Achse oder zwei zueinander geneigte Achsen.

Vorteilhaft sind die Distanzmittel gegenüber dem Zugelement und dem Druckelement verkippbar. Somit tritt gleichzeitig mit einer Verschiebung und einer Verbiegung von Druck- und Zugelement auch eine Verkippung des Zugelements und des Druckelements gegenüber den Abstandmitteln auf. Sowohl die Verformung von Druck- und Zugelement als auch die Verkippung gegenüber den Abstandmitteln kann elastisch geschehen, so dass darin Energie gespeichert wird.

In vorteilhaften Ausführungsformen der Erfindung bilden die Abstandmittel zusammen mit Zug- und Druckelement in einem Schnitt in Erstreckungsrichtung eine Vieleckstruktur. Diese Vieleckstruktur ist insbesondere wenigstens eine Viereckstruktur. Bei einer solchen Vieleckstruktur sind durch Belastung die Winkel der Vielecke veränderbar und/oder die Seiten der Vielecke verformbar. Ein viereckiger Querschnitt verändert sich parallelogrammartig.

Das Zugelement und das Druckelement kann in einem mittleren Bereich in einem grösseren Abstand voneinander gehalten sein als in den beiden Endbereichen. Der gewählte Abstand kann die Steifigkeit der Verbindung beeinflussen.

Die Steifigkeit der Verbindung zwischen dem Zugelement und dem Druckelement beeinflusst das Verhalten der Struktur. Eine erhöhte Steifigkeit der Verbindung behindert eine Verschiebung des Druckelements gegenüber dem Zugelement an dieser Verbindungsstelle. Die Steifigkeit der Verbindung kann unterschiedlich beeinflusst werden. Zweckmässigerweise ist das Zugelement und das Druckelement im Bereich der Tragachse steifer und zwischen den Endbereichen und der Tragachse weniger steif miteinander verbunden.

Das Zugelement und das Druckelement können Teil eines flexiblen Kunststoffprofils sein. Dieses Kunststoffprofil weist z.B. eine Mehrzahl von horizontal in der Lehne angeordneten Kanälen auf, deren Querschnitte bei Belastung sich einzeln parallelogrammartig unter gleichzeitiger Verformung benachbarter Kanäle verformen.

Eine solche Sitzlehne, z.B. für Fahrzeugsitze, besitzt daher einen unteren Stützbereich für das Becken eines Benützers, der einem Abkippen nach hinten eines mit diesem Stützbereich gestützten Beckens entgegenwirkt. Es besitzt aber auch einen oberen Stützbereich für die Wirbelsäule. Die Lehne weist ein flexibles Kunststoffprofil mit einer Mehrzahl von horizontal in der Lehne angeordneten, durch Lamellen zu einem viereckigen Querschnitt aufgeteilten Versteifungskammern auf, die bei Belastung der Lehne sich einzeln im Querschnitt parallelogrammartig unter gleichzeitiger Verformung benachbarter Kammern verformen. Zwischen dem oberen und dem unteren Stützbereich ist die Lehne gelagert. Der untere Stützbereich wird in Folge eines Drucks mit dem Rückgrat auf den oberen Stützbereich gegen das Becken gedrückt. Der obere und der untere Stützbereich passen sich der Form des Rückens bzw. der Form des Beckens an und stützen den Körper mit gleichmässig verteilten Kräften.

Mit dem Druckelement, dem Zugelement und/oder den Abstandmitteln können senkrecht zur Erstreckungsrichtung gerichtete Versteifungsstreifen verbunden sein, um die Wirkung der Struktur zur Seite hin auf seitliche Bereiche der Stützfläche zu übertragen.

Die Versteifungsstreifen können flache Kunststoffstreifen sein, die in Führungen eingelassen sind, die in die Kammern trennenden Lamellen vorhanden sind. Die Versteifungsstreifen können auch eine um die Biegeachsen bewegliche, rückseitige Verkleidung der Rückenlehne bilden. Die Versteifungsstreifen einer solchen Verkleidung sind zweckmässigerweise mittels elastischen Zungen, insbesondere Gummizungen, welche in entsprechenden Nuten im Druckelement eingreifen, am Druckelement befestigt.

Vorteilhaft ist die Struktur lediglich in einem mittleren Bereich ausgebildet, und seitlich neben diesem mittleren Bereich liegende Bereiche der Stützfläche mittels parallel zu den Biegeachsen verlaufenden Versteifungsstreifen abgestützt. Diese Versteifungsstreifen können an unterschiedlichen Teilen der Struktur befestigt sein. Es können mehrere Versteifungsstreifen an den Abstandmitteln oder am Druckelement befestigt sein.

Die Versteifungsstreifen können an ihren äusseren Enden mit der Stützfläche oder einem Rahmen um die Stützfläche verbunden sein und/oder sie können in einen Polsterkörper eingebunden sein.

Bei einer bevorzugten Rückenlehne sind an wenigstens zwei voneinander beabstandeten Stellen der Rückenlehne voneinander unterscheidbare Strukturen im Sinne des Anspruchs 1 vorhanden. Jede dieser Strukturen umfasst ein Zugelement, ein Druckelement und Abstandmittel. Diese Strukturen können vorzugsweise im einem Randbereich angeordnet sein.

Die Abstandmittel dieser unterscheidbaren Strukturen können miteinander verbunden sein. Auch können die Biegeachsen einer Struktur von einer Parallelen zu den Biegeachsen einer zweiten Struktur abweichen. Diese Abweichung kann unterschiedlich erreicht werden. Eine Möglichkeit besteht darin, die Biegeachsen in einem Schnitt quer zur Erstreckungsrichtung in einem von 0 und 180 Grad abweichenden Winkel zueinander auszubilden. Dies wird z.B. dadurch erreicht, dass lamellenartige Abstandmittel parallel zu solchen Biegeachsen an Druckelement und Zugelement angelenkt sind.

Eine weitere Möglichkeit bietet sich darin, die Biegeachsen in einem Schnitt parallel zur Stützfläche in einem von 0 und 180 Grad abweichenden Winkel zueinander anzuordnen. Eine weitere Möglichkeit besteht darin, die Biegeachsen in einem von 90 Grad abweichenden Winkel zur Erstreckungsrichtung auszurichten. Alle drei möglichen Abweichungen von der parallelen Ausrichtung können auch miteinander kombiniert werden.

Durch eine solche Abweichung von der parallelen Ausrichtung der Biegeachse zweier unterscheidbarer Strukturen kann eine Verformung der gesamten Rückenlehne um Biegeachse parallel zur Höhe der Rückenlehne in Abhängigkeit einer Verformung um die horizontal verlaufenden Biegeachsen erreicht werden. Eine solche kombinierte Verformung in zwei sich querenden Richtungen generiert eine elastische Rückstellkraft zum Rückstellen der Verformung.

Es wird damit erreicht, dass diese Rückstellkraft durch Veränderung des Winkels der Abweichung von der parallelen Ausrichtung eingestellt werden kann.

In vorteilhaften Ausführungsbeispielen umschliessen Zugelement und Druckelement einen Raum mediumdicht und sind mit einem Einlass für ein Medium ausgerüstet. Es können auch lediglich einzelne mediumdichte, aufblasbare Körper zwischen Druckelement und Zugelement eingefügt sein. Bei beiden Ausführungsformen kann die Steifigkeit der Verbindung von Druck- und Zugelement durch den Druck im mediumdichten Raum eingestellt werden.

Die Abstandmittel brauchen in einem mit Überdruck gefüllten Raum lediglich einer Zugbelastung Widerstand leisten zu können.

Die Abstandmittel können in einer Vielzahl von Ausführungsformen vorgesehen werden. Die Abstandmittel können durch ein im Querschnitt wabenförmige Kanäle aufweisendes Wabenprofil oder durch an das Zugelement und das Druckelement angelenkte, langgestreckte Lamellen gebildet sein. Solche Lamellen können in gegeneinander versetzten Reihen angeordnet sein.

Die Abstandmittel können durch Seitenwände eines im Querschnitt viereckigen Profils oder Kanals gebildet sein. Sodann sind das Zugelement und das Druckelement zweckmässigerweise zusammengesetzt aus einer Mehrzahl von solchen viereckigen Profilen, die seitlich aneinander gereiht und flexibel miteinander verbunden sind.

Die Abstandmittel können ferner stiftförmig ausgebildet sind. Dies erlaubt beispielsweise die Abstandmittel kugelgelenkig mit dem Zugelement und dem Druckelement zu verbinden.

Weiter können die Abstandmittel durch Elemente gebildet sein, welche sich einer ebenflächigen Kurve oder aber einer räumlich gebogenen Kurve entlang erstrecken.

Die anpassende Wirkung der Struktur mit Zugelement und Druckelement welche an zwei Stellen unverschieblich miteinander verbunden sind, und zwischen diesen Stellen Abstandmitteln, welche eine Verschiebung des Druckelements gegenüber dem Zugelement bei einer Verformung beider erlauben, kann auch in Richtung der Breite der Rückenlehne genutzt werden. Entsprechend breitet sich bei einer vorteilhaften Rückenlehne eine Querstruktur quer zur Erstreckungsrichtung in die Breite der Rückenlehne aus. Diese Querstruktur ist um Biegeachsen quer zur Ausbreitungsrichtung verbiegbar und weist auf der Vorderseite ein Zugelement und auf der Rückseite ein Druckelement auf. Zugelement und Druckelement sind an zwei Stellen unverschieblich miteinander verbunden und dazwischen mit Abstandmitteln in Richtung der Ausbreitungsrichtung verschieblich miteinander verbunden.

Vorteilhaft bilden die Zugelemente der sich ausbreitenden Strukturen und der sich quer dazu erstreckenden Strukturen eine Einheit. Ebenso ist es zweckmässig, dass die Druckelemente der sich ausbreitenden Strukturen und der sich quer dazu erstreckenden Strukturen eine Einheit bilden. Die Zugelemente, bzw. Druckelemente, bilden bevorzugt einen die Stützfläche umrandenden Rahmen. Die Stützfläche kann in diesem Rahmen aufgespannt sein und beispielsweise aus einem elastischen Gewebe gefertigt sein.

Die Abstandmittel verbinden das Druckelement und das Zugelement dabei zweckmässigerweise in einer ersten Richtung unverschieblich, um für die in die andere Richtung sich ausbreitende Struktur eine unverschiebliche Verbindung zu schaffen, und in einer dazu quer liegenden zweiten Richtung verschieblich miteinander, um eine Verschiebung unter Verformung der Druck- und Zugelemente der sich in dieser Richtung erstreckenden Struktur zu erlauben.

Die Erfindung betrifft auch einen Stuhl oder Fahrzeugsitz mit einer erfindungsgemässen Rückenlehne.

Die Rückenlehne kann zweckmässigerweise ein Kunststoffprofil mit einer Mehrzahl von Kammern aufweist, die sich horizontal erstreckend in der Lehne angeordnet sind. Die Lehne ist am Stuhlgestell um eine horizontale Achse gelagert, welche unterhalb der vertikalen Mitte der Lehne und vom unteren Ende der Lehne beabstandet ist.

In gewissen Ausführungsformen der Erfindung sind im Wesentlichen horizontal angeordnete Versteifungsstreifen vorgesehen. Diese können flache Kunststoffstreifen sein, die in entsprechenden in den Kammern vorgesehenen Führungen horizontal liegend angeordnet sind. Es kann auch eine aus Kunststofflamellen ausgeführte, in sich um eine Mehrzahl von horizontalen Kippachsen bewegliche, rückseitige Verkleidung der Lehne, die über in entsprechende Nuten eingreifende Gummizungen an der Struktur angesetzt ist, vorgesehen sein.

Die Rückenlehne oder die sich in Richtung der Höhe der Rückenlehne erstreckenden Struktur ist bevorzugt entgegen einer Federkraft um die Tragachse verschenkbar ausgebildet. Dies bewirkt, dass sich die Lehne als Ganzes an die Rückenneigung anpasst.

Vorzugsweise ist die funktionelle Struktur hinter der Stützfläche angeordnet, wobei die Stützfläche das Zugelement bilden kann. Es ist aber auch dahingehend eine Umkehrung denkbar, dass das Druckelement die Stützfläche bildet oder die Stützfläche trägt, und das Zugelement seitlich angeordnet ist und vor dem mittleren Bereich der Stützfläche liegt.

Bei einer bevorzugten Ausführung mit der Stützfläche vor der Struktur besitzt das Stützelement, insbesondere die Rückenlehne, eine vorderseitige Stützfläche. Das Stützelement ist um Kippachsen, welche senkrecht zu seiner Längsrichtung gerichtet sind, verbiegbar.

Ein derartiges Stützelement kann nicht nur eine Rückenlehne bilden, sondern auch beispielsweise eine Nackenstütze oder eine Armlehne. In diesem Sinne ist der Begriff Lehne auch auf andere Stützelemente ausdehnbar.

Das Stützelement ist zwischen den beiden Längsenden gelagert und es ist mit einem rückseitigen Druckelement versehen. Das Druckelement ist in einem Abstand zur vorderseitigen Stützfläche angeordnet. Die Stützfläche und das Druckelement sind in den beiden Endbereichen direkt (dreieckförmig) und in einem mittleren Bereich vermittels eine Viereckstruktur bildenden Distanzmitteln (Stegen) miteinander verbunden. Diese Viereckstruktur ist durch Belastung des Stützelements parallelogrammartig verformbar.

Die Struktur kann durch ein Kunststoffprofil erreicht sein, welches in einem mittleren Bereich im Querschnitt etwa rechteckige Kammern aufweist, an den Enden jedoch im Querschnitt einem Dreieck angenäherte Kammern aufweist.

Dabei ist vorteilhaft, dass durch ein Kunststoffprofil mit einer Mehrzahl von Horizontalkammern durch die flexiblen Kammerseitenwände und steifen Lamellenstege zwischen den Kammern eine Nachgiebigkeit erzielt wird, die insbesondere ein Verbiegen der Lehne um bei Rückenlehnen horizontale Biegeachsen an den Lamellenkanten zur Vorder- und Rückseite ermöglicht.

Durch unterschiedliche Befüllung der Kammern kann die Flexibilität individuell eingestellt werden, durch unterschiedliche Dimensionierung der Kammern kann der unterschiedlichen Lage der Kammern in der Lehne entsprechend bereits bei der Fabrikation der Sitzlehne in Teilbereichen eine unterschiedliche Steifigkeit gegeben werden.

Weiter wird vorgeschlagen, durch zusätzliche Druckelemente in den Kammern ein seitliches Abknicken der Lehne bei nicht mittiger Belastung zu vermeiden. Die Lehne kann nur insgesamt sich der Wirbelsäule anformen, bzw. die Form des Rückens annehmen. Dadurch wird gleichzeitig eine zu weiche Lehne insbesondere eine Kuhle in der Mitte, vermieden.

Dadurch, dass das Kunststoffprofil insgesamt z.B. durch eine Verkleidung, die an den einzelnen Kammern angelagert ist, rückseitig versteift ist, ergibt sich weiter bei Verkippung der Lehne der positive Effekt, dass im unteren Bereich oberhalb des Beckens (im Lumbalbereich des Rückens) die Lehne insgesamt fest nach vorn an den Rücken drückt. Dabei wird der Form des menschlichen Rückens in diesem Bereich Rechnung getragen und gleichmässig Druck ausgeübt.

Weitere Vorteile und Merkmale der Erfindung ergeben sich aus nachfolgender Beschreibung bevorzugter Ausführungsbeispiele anhand der beigefügten Zeichnungen.

Dabei zeigt:
- Fig. 1: eine schematische Darstellung der Komponenten einer erfindungsgemässen Lehne im teilweisen Schnitt, mit Unterstützungsstreifen in jeder zweiten Lamellenwandung,
- Fig. 2: eine Schnittzeichnung durch eine Bürosessellehne mit Unterstützungsstreifen in jeder Lamellenwandung,
- Fig. 3: eine Ansicht eines erfindungsgemässen Stuhles, mit geschnitten dargestellter Lehne,
- Fig. 4: eine schematische Darstellung einer Pumpbewegung zum Aufpumpen der Kammern,
- Fig. 5: eine Darstellung eines Autositzes bei dem ein einfacheres, mit horizontalen Kammern versehenes Profil eingearbeitet ist,
- Fig. 6: eine Schnitt-Darstellung eines Autositzes mit einem solchen Profil unter Belastung,
- Fig. 7: schematisch eine Aufpumpeinrichtung,
- Fig. 8: eine perspektivische Skizze einer Sitzlehne mit eingesetzten Rippen zwischen einer vorderen Schicht (Zugelement) und einer hinteren Schicht (Druckelement) eines Lehnenprofils,
- Fig. 9: die selbe Sitzlehne in einer Ansicht mit den darin versetzt eingesetzten Rippen,
- Fig. 10: eine perspektivische Skizze einer solchen Rippe,
- Fig. 11: einen Querschnitt durch eine Rippe, welche mit der vorderen und hinteren Schicht des Lehnenprofils beweglich verbunden ist,
- Fig. 12: eine perspektivische Skizze einer Sitzlehne mit einem Lehnenprofil, das mit einer waben-röhrenartigen Struktur ausgefüllt ist und mit einer Polsterung versehen ist,
- Fig. 13: eine Querschnitt durch die Sitzlehne gemäss Figur 12 mit einer daran angelehnten Wirbelsäule,
- Fig. 14: eine Illustration einer solchen Struktur,
- Fig. 15: eine Expansionszeichnung einer Sitzlehne mit einem Lehnenprofil und einem aufblasbaren Einsatz,
- Fig. 16: eine gelochte Trennwand des aufblasbaren Einsatzes,
- Fig. 17: eine perspektivische Skizze einer Sitzlehne, welche aus verschiedenen Profilen über Gummifedern zusammengesetzt ist,
- Fig. 18: einen Detailschnitt, aus dem die Zusammensetzung des rückseitigen Druckelements aus Holzlamellen, Aluprofilen und Gummifedern dargestellt ist,
- Fig. 19: eine Gummifeder
- Fig. 20: eine perspektivische Skizze eines Sitzes mit einer Sitzlehne mit einem Lehnenprofil, darin Federstahlbügeln als Distanzelemente und einer Polsterung,
- Fig. 21: eine Detaildarstellung eines Federstahlbügels und dessen Verbindung mit dem Lehnenprofil,
- Fig. 22: einen Schnitt durch ein Stützelement mir einem Stützprofil und darin eine Vielzahl von stabförmigen Abstandelementen,
- Fig. 23: einen Detailschnitt durch das Stützelement bei einem Abstandelement,
- Fig. 24: ein Abstandelement,
- Fig. 25: eine perspektivische Skizze eines Sitzes mit einer Sitzlehne aus einem transparenten, extrudierten Lehnenprofil aus Kunststoff, und einer Polsterung,
- Fig. 26: eine erklärende Darstellung zur Stützfunktion des Lehnenprofils in Richtung seiner Längserstreckung,
- Fig. 27: eine zweite perspektivische Skizze desselben Sitzes,
- Fig. 28: eine perspektivische Skizze einer Sitzlehne mit einem durch Rippen verbreiterten, die Stützfunktion gewährenden, mittleren Lehnenprofil und einer Polsterung,
- Fig. 29: das Funktionsgerippe der Sitzlehne gemäss Figur 28
- Fig. 30: eine erklärende Skizze einer Variante der Sitzlehne gemäss Figuren 28 und 29, bei welcher das Funktionsgerippe in eine geschäumte Sitzlehne integriert ist, also im Innern des Schaumkörpers angeordnet ist,
- Fig. 31: einen Schnitt durch diese Sitzlehne,
- Fig. 32: eine zweite perspektivische Skizze der selben Sitzlehne,
- Fig. 33: eine perspektivische Skizze einer Sitzlehne, bei welcher das Lehnenprofil lediglich an den Rändern durch Stege verbunden ist,
- Fig. 34: das Lehnenprofil ohne Stege mit einer vorderseitigen, ganzflächigen Stützfläche und zwei rückseitigen, entlang des Rands der Stützfläche verlaufenden Druckelementen,
- Fig. 35: eine Rippe oder einen Steg zum Einsetzen in das Lehnenprofil, welche Rippe zwischen den Endbereichen Ausnehmungen aufweist, die eine elastische Abstützung der Stützfläche erlauben,
- Fig. 36: eine solche Rippe mit PU-Schaum Aufdoppelung im Bereich der Ausnehmungen,
- Fig. 37: einen Endbereich der Rippe in Aufsicht,
- Fig. 38: eine perspektivische Skizze eines Sitzes mit einer Sitzlehne, welche ein rückseitiges Druckelement aufweist, das seitlich geschlitzt ist,
- Fig. 39: eine Rückansicht des Druckelements,
- Fig. 40: das Funktionsteil, welche im mittleren Bereich der Sitzlehne angeordnet und mit dem Versteifungsteil verbunden ist,
- Fig. 41: eine Seitenansicht der Sitzlehne,
- Fig. 42: eine Rückenlehne mit umlaufendem Rahmen, welcher über Rippen mit einer mittig angeordneten funktionellen Struktur verbunden ist,
- Fig. 43: Detailansicht der Lagerung der Rippen,
- Fig. 44: eine Rückenlehne mit der funktionellen Struktur in jeweils den seitlichen Teilen eines Rahmens, bei welcher die Abstandmittel in den beiden seitlichen Teilen um Achsen verschwenkbar sind, die nicht parallel zueinander stehen,
- Fig. 45: der Rahmen ohne Abstandmittel,
- Fig. 46: eine Rippe, welche für beide seitlichen Rahmenteile ein Abstandmittel trägt,
- Fig. 47: eine Darstellung des Effekts eines Winkels zwischen den Biegeachse von zwei sich etwa parallel erstreckenden Strukturen,
- Fig. 48: eine Frontalansicht, eine Seitenansicht und eine Draufsicht auf eine Rückenlehne mit einem Rahmen, bei welchem jeweils zwischen zwei Eckpunkten eine Struktur ausgebildet ist,
- Fig. 49: eine perspektivische Skizze der Rückenlehne gemäss Figur 48.

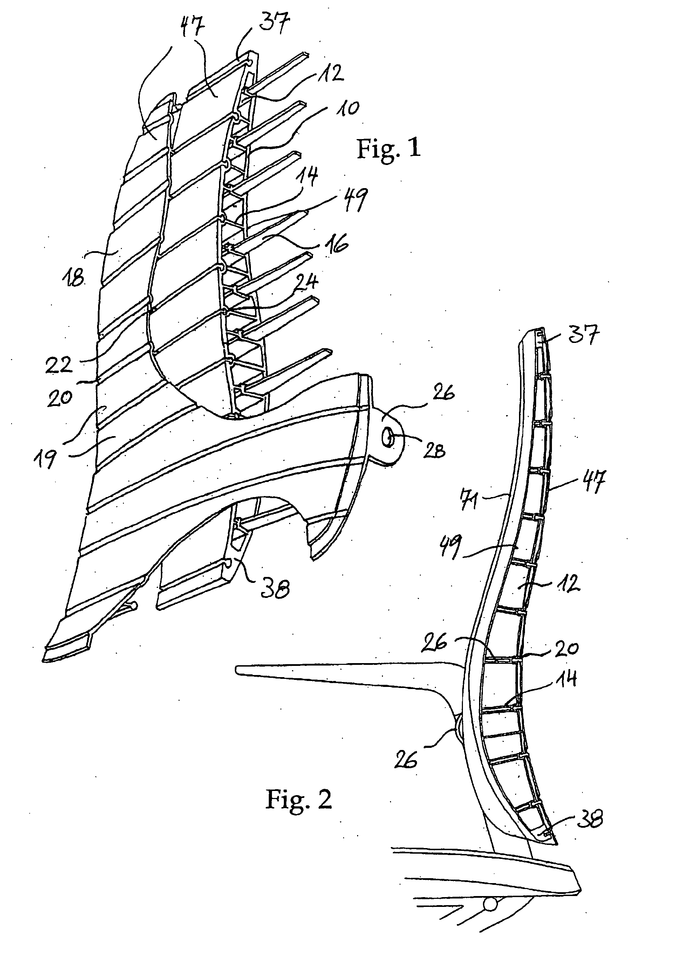

Das in Figur 1 dargestellte Kunststoffprofil 10 weist eine Vielzahl von einzelnen Kammern 12 auf, wobei zwischen diesen Kammern Lamellenstege 14 ausgebildet sind und in einigen der Stege (in der Fig. 1 in jedem zweiten Steg) weitere Aufnahmefächer zur Aufnahme von versteifenden, leistenförmigen Elementen 16 vorgesehen sind, die das Kunststoffprofil gegenüber einer Durchbiegung um eine vertikale Achse schützen.

Eine rückseitige Versteifung 18 wird durch einzelne übereinander angeordnete, vertikal ausgerichtete und sich horizontal erstreckende, zweite Kunststofflamellen 19 gebildet, die über zwischen ihnen befindliche PVC Gummiabschnitte 20 der körperbezogenen Verformung der Lehne um horizontale Kippachsen keinen Widerstand entgegensetzen.

Anstatt der vorgeschlagenen Kunststofflamellen kann auch eine durchgehende Lamellenschale als Alternative eingesetzt werden.

Die Gummiabschnitte 20 jeder Lamelle 19 weisen in einer bevorzugten Ausführungsform Gummizungen 22 auf, die in entsprechenden Nuten 24 des Kunststoffprofils 10 eingreifen. An der rückseitigen Versteifung sind als Support des gesamten Stützelements nach vorn in den Armlehnenbereich ragende Lagerzungen 26 für eine horizontale Drehachse vorgesehen. Diese gedachte Achse wird durch Drehverbindungen 28 und in ihnen befestigte Bolzen oder dergleichen gebildet.

In der Fig. 2 ist der erfindungsgemässe Aufbau nochmals im Schnitt dargestellt. Deutlich sind die Gummiabschnitte 20 als schwarze, zwei Kunststofflamellen jeweils miteinander verbindende Abschnitte zu erkennen. Anders als in der Fig. 1 ist hier in jedem Lamellensteg 14 ein leistenförmiges Element 16 eingesetzt.

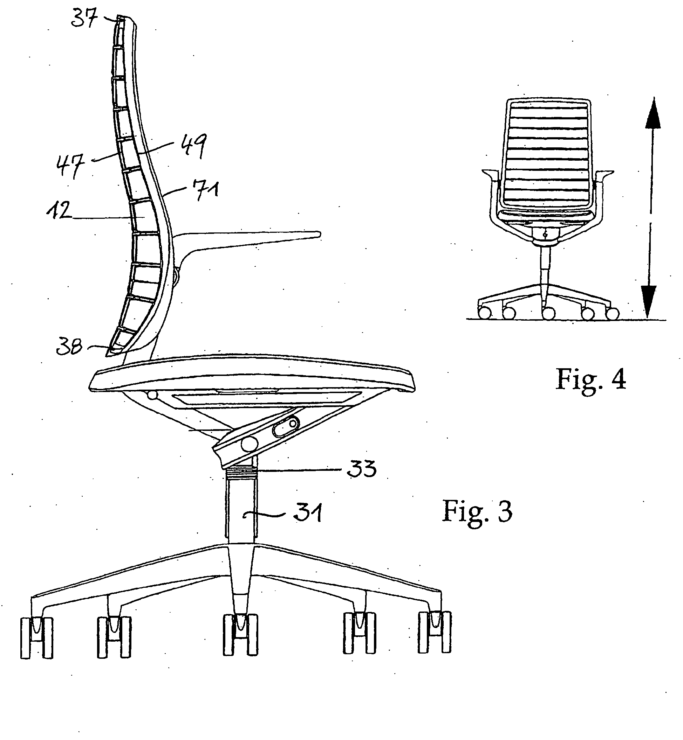

In der Fig. 3 schliesslich ist der gesamte Stuhl mit einer oberhalb der Gasdruckfeder 31 vorgesehenen Pumpmanschette 33 zum Aufpumpen einzelner Luftkammern 12 dargestellt.

In der Fig. 4 wird rein schematisch dargestellt, wie durch eine Auf- und Abbewegung des auf dem Stuhl sitzenden Benutzers genügend Luftdruck erzeugt wird, um einzelne Kammern mehr oder weniger stark aufzublasen.

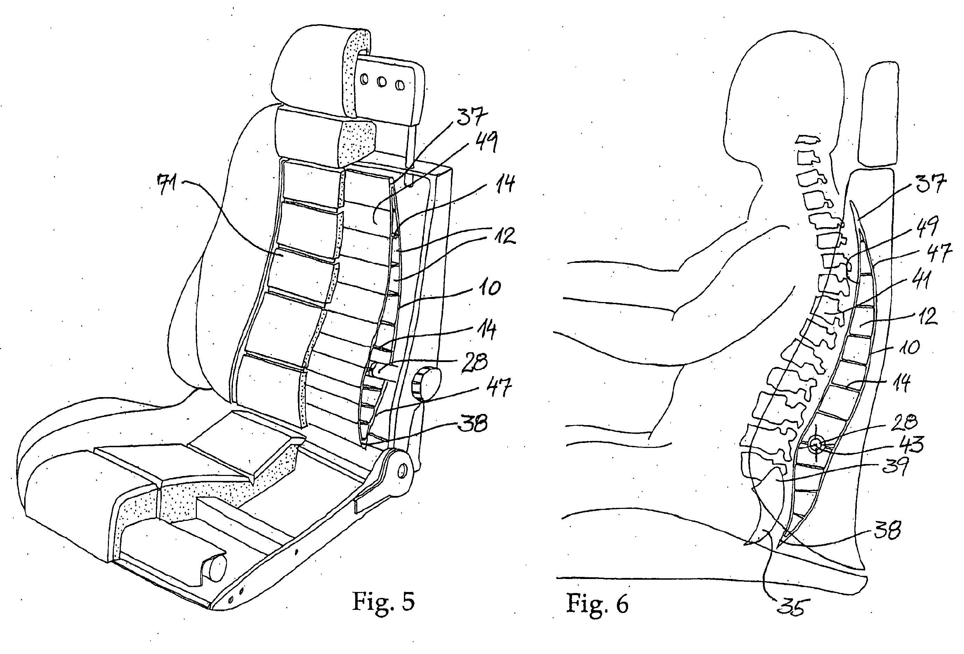

In den Figuren 5 und 6 ist der erfindungsgemässe Aufbau nochmals im Schnitt am Beispiel eines Autositzes dargestellt. Deutlich ist zu sehen, dass eine zum unteren Ende 38 hin verringerte Dicke des Profils 10 (Verkürzung der Lamellenstege 14 bezüglich ihrer Tiefe) ein Druck auf das Steissbein 35 minimiert wird. Ein an das Becken 39 des Benutzers anliegender Beckenrandbereich setzt direkt an der die Lehne haltenden Lagerung an und wirkt so einem Abkippen des Beckens nach hinten entgegen.

Weiter ist das flexible Kunststoffprofil 10 mit einer Mehrzahl von horizontal in der Lehne angeordneten Versteifungskammern gut zu erkennen. Bei Belastung der Lehne durch die Wirbelsäule 41 des Benutzers verformen sich die einzelnen Versteifungskammern 12, unter gleichzeitiger Verformung benachbarter Kammern 12 , im Querschnitt parallelogrammartig. Die die Kammern 12 trennenden Lamellenstege 14 werden dabei verkippt und nur wenig gebogen.

Dabei kann durch eine aussen an das Profil 10 ansetzende Schale 18 eine weitere Verkoppelung der Lamellenstege 14 erfolgen. Eine aus Kunststofflamellen 19 ausgeführte, in sich um eine Mehrzahl von horizontalen Kippachsen bewegliche, rückseitige Verkleidung der Lehne, die über in entsprechende Nuten 24 eingreifende Gummizungen 22 an einem die Luftkammern aufnehmenden Profil 10 angesetzt ist, kann (wie in Fig. 1) eine solche aussen an das Profil 10 ansetzende Schale 18 bilden. Diese Schale 18 bewirkt dank der Verkopplung mit den Lamellenstegen 14 eine Verteilung des Druckes.

Somit kann einerseits bei einem einwirkenden Druck punktuellen Belastungen (z.B. in der Mitte durch Wirbel) mit einem weichen Lamellenstegmaterial leicht nachgegeben werden. Anderseits wird von den benachbarten Lamellenstegen 14, insbesondere bei einer Verstärkung der Kammerwandung durch die Kunststofflamellen 19 der Schale 18, genügend Rückstellkraft für eine an der Wirbelsäule anliegende Gesamtverformung der Lehne erbracht.

Die Lehne wird an einer Sitzbasis um eine horizontale Achse 43 unterhalb der vertikalen Mitte der Lehne, bevorzugt knapp oberhalb des Beckenrandbereiches gelagert.

Durch horizontal ausgerichtete und in dem Kunststoffprofil 10 zwischen zwei Kammern 12 angeordnete Versteifungsstreifen 16, ein Aufpumpen der Kammern 12 mit z.B. Luft, ein Füllen der Kammern 12 mit einem schaumstoffartigen Material und Versteifungen, die in entsprechenden in den Kammerwandungen vorgesehenen Führungen eingelassen sind, lässt sich die "Härte" der Lehne (ggf. auch nur in Teilbereichen) regulieren.

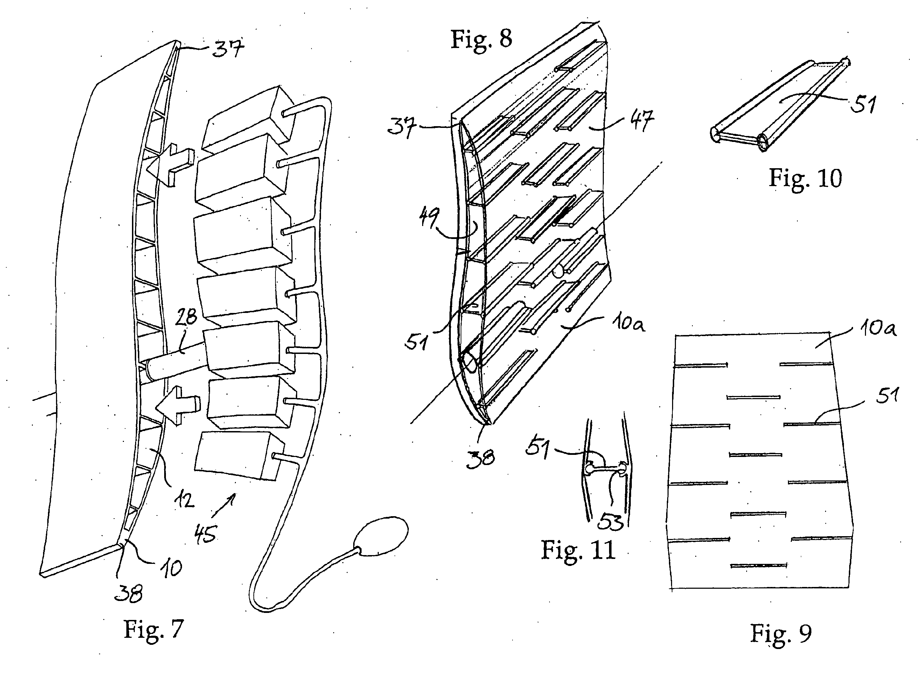

In der Fig. 7 schliesslich ist schematisch eine Aufpumpeinrichtung 45 dargestellt, welche in die Kammern 12 eines Profils 10 einsetzbar ist. Durch Aufpumpen der in den Kammern 12 angeordneten Körper kann die Steifigkeit der Kammer erhöht werden.

Bei dem Ausführungsbeispiel gemäss Figuren 8 bis 11 sind in einem Lehnenprofil 10a aus Kunststoff zwischen einem rückseitigen Druckelement 47 und einem vorderseitigen Zugelement 49 Rippen 51 als Abstandmittel eingesetzt. Im Profil 10a sind Aufnahmennuten 53 (Fig. 11) ausgebildet, in welche die Rippen 51 eingesetzt werden können. Die Rippen 51 sind darin beweglich angeordnet. Es sind nebeneinander drei Reihen von Rippen 51 vorhanden, welche gegeneinander versetzt angeordnet sind. Zum oberen und zum unteren Rand der Lehne hin werden die Rippen 51 schmaler.

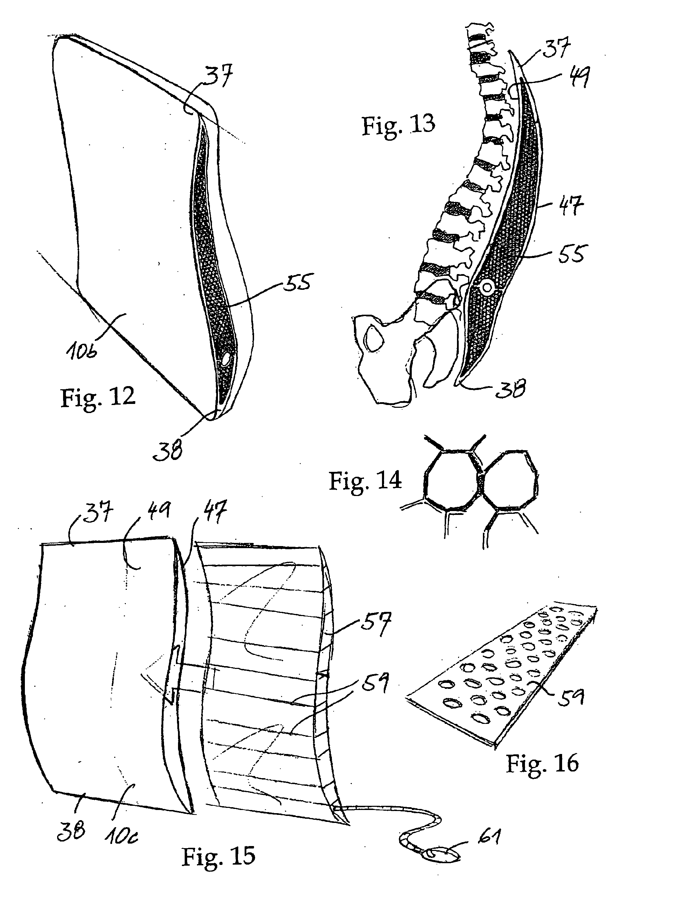

Beim Ausführungsbeispiel gemäss Figuren 12 bis 14 sind die Abstandmittel im Innern des Lehnenprofils 10b durch ein Profilelement 55 mit röhrenbündelartiger Struktur, welche Struktur im Querschnitt wabenartig ist. Die Struktur kann im Querschnitt z.B. sechseckige oder acht- und viereckige Röhren aufweisen.

Bei dem Ausführungsbeispiel gemäss Figuren 15 und 16 ist die funktionelle Struktur ein aufblasbarer Körper 57 in einer Rückenlehne. Die Luftkammer ist mit luftdurchlässigen Abstandfolien in Form gehalten. Diese Abstandfolien 59 (Fig. 16) nehmen lediglich Zugkräfte auf. Druckkräfte werden über das Füllmedium übertragen. Ein solcher Körper kann mit einer Flüssigkeit oder mit einem Gas gefüllt sein. Der aufblasbare Körper benötigt dazu lediglich ein Ventil zum Befüllen des Körpers. In Figur 15 ist zudem eine Pumpe 61 dargestellt. Der aufblasbare Körper 57 kann in eine Rückenlehne 10c eingefügt werden. Zugelement 49 und Druckelement 47 sind in Figur 15 durch die Rückenlehne 10c, die Abstandmittel durch den darin eingefügte aufblasbaren Körper 57 gebildet.

Die in Figuren 17 bis 19 dargestellte Rückenlehne 10d ist aus einer Vielzahl von Hohlprofilen 63 aufgebaut, die über elastische Gummifedern 65 miteinander verbunden sind. Ein Hohlprofil 63 kann z.B. aus einem U-förmigen Profil gebildet sein, dessen offene Seite durch eine Holzblende 67 verschlossen ist.

Bei dem Ausführungsbeispiel gemäss Figuren 20 und 21 ist das Abstandmittel durch wellenförmig in einer Fläche gebogene Drahtrippen 69 gebildet. Diese halten das Zugelement 49 und das Druckelement 47 in Abstand und sind in sich um Achsen senkrecht zu ihrer Längsausdehnung verbiegbar. Dies erlaubt eine Anpassung der Stützfläche 71 auch senkrecht zur Längsausdehnung eines daran angelehnten Rückgrates 41. Die Drahtrippen 69 sind an den Berührungsstellen mit dem Druckelement 47 und dem Zugelement 49 verkippbar mit diesen verbunden.

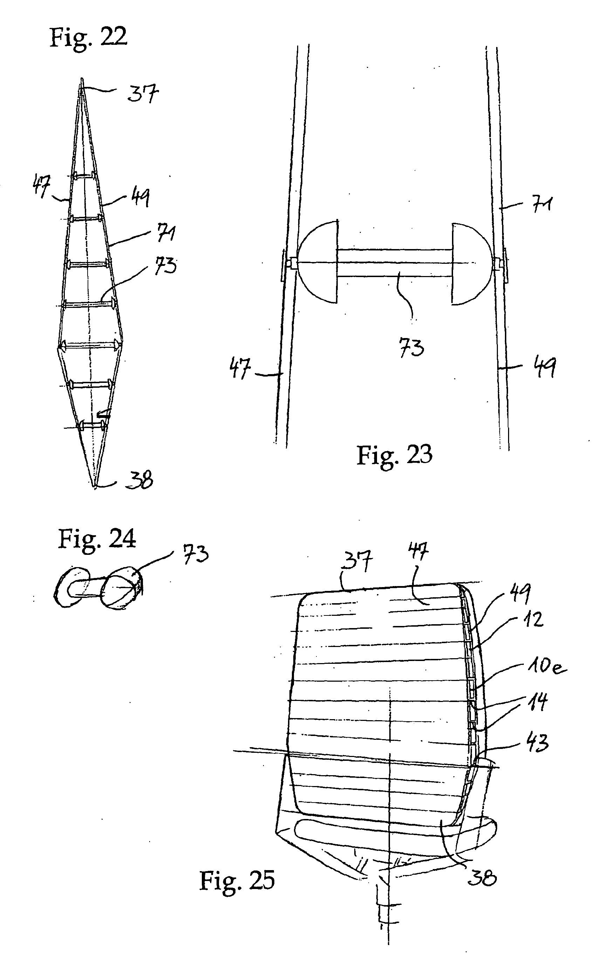

Beim Ausführungsbeispiel gemäss Figuren 22 bis 24 sind die Abstandmittel Abstandstifte 73, die kugelgelenkig an Zugelement 49 und Druckelement 47 angelenkt sind. Diese erlauben daher eine Verschiebung von Druck- und Zugelement gegeneinander in allen Richtungen parallel zu den Ausdehnungen der Stützfläche 71.

Beim Ausführungsbeispiel gemäss den Figuren 25 bis 27 ist die funtionelle Struktur ein Kunststoffprofil 10e mit horizontal liegenden, viereckigen Kanälen darin. Die Kanäle oder Kammern 12 sind durch die Flächen des Druckelements 47 und des Zugelements 49 und die zwischen den Kanälen sich horizontal erstreckenden Abstandlamellen 14 begrenzt. In einer dieser Abstandlamellen 14 ist die Tragachse 43 angeordnet. Da die Lamelle elastisch ist und die Tragachse 43 nicht die gesamte Breite der Lamelle einnimmt, ist auch bei der Tragachse 43 das Druck- und das Zugelement gegeneinander verschieblich miteinander verbunden. Jedoch ist die Verschiebbarkeit gegenüber der Verschiebbarkeit bei benachbarten Abstandlamellen 14 verringert.

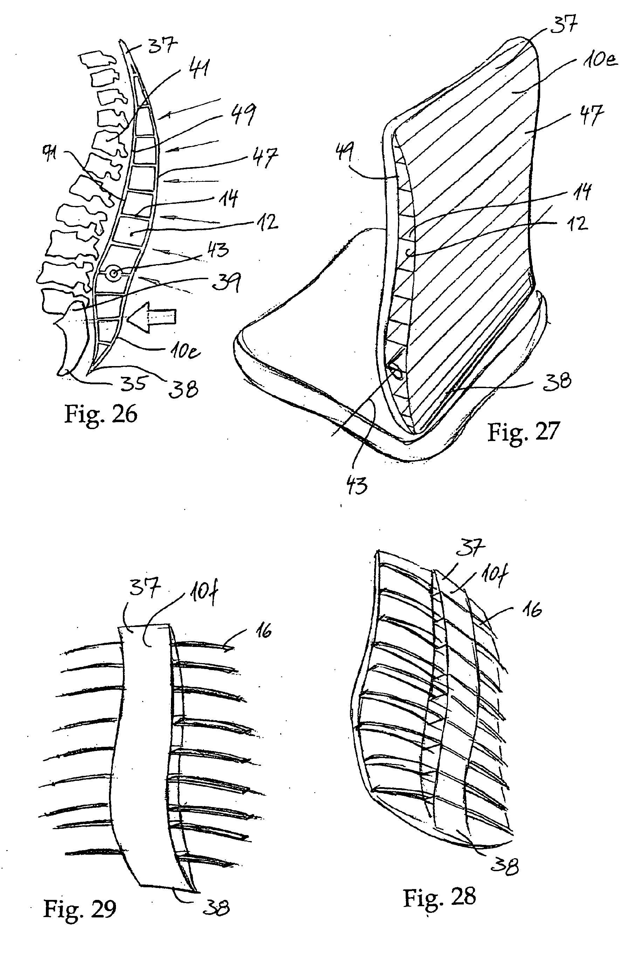

In den Ausführungsbeispielen gemäss den Figuren 28 und 29, wie 30 bis 32, oder 42 und 43 ist eine mittig angeordnete funktionelle Struktur 10f vorhanden, deren Wirkbereich durch Rippen 16 auf die gesamte Breite der Rückenlehne ausgedehnt ist. Das Zusammenspiel von schmaler, funktioneller Struktur 10f und in die Breite ausladenden Rippen 16 ermöglicht eine konkave Ausformung der Rückenlehne, ohne dass dadurch die funktionelle Struktur in ihrer Wirkung behindert würde. Die ausladenden Rippen 16 sind in Bezug zueinander nicht in einen festen Abstand fixiert, wie dies bei den Abstandlamellen 14 der mittigen Struktur 10f der Fall ist. Daher können sie der Bewegung der funktionellen Struktur 10f auch bei gewölbter Form frei folgen.

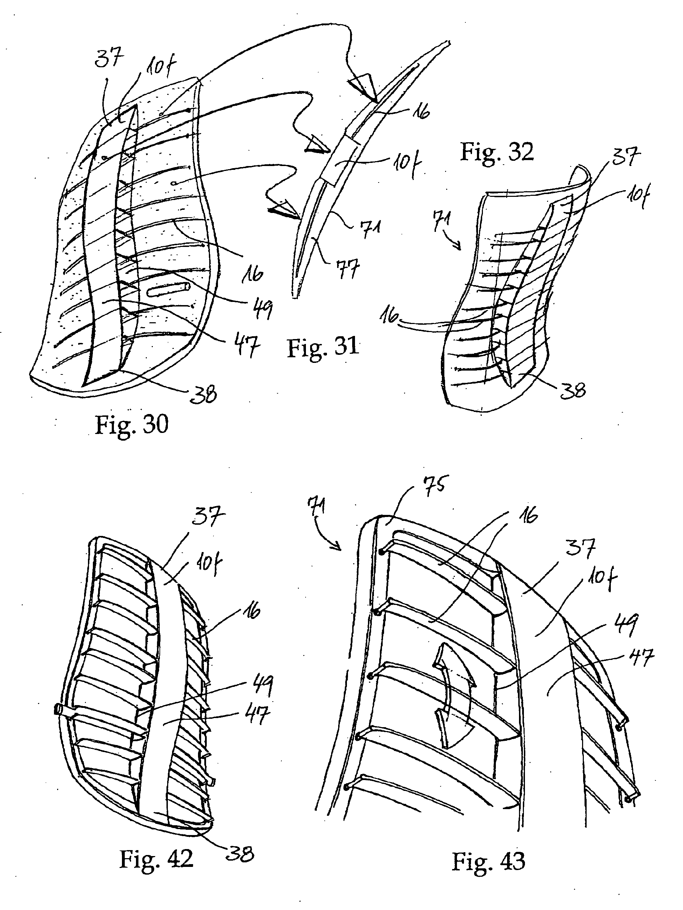

Bei dem Ausführungsbeispiel gemäss Figuren 42 und 43 hingegen sind die Enden der Rippen 16 mit einem Rahmen 75 verbunden. Dieser hält die Rippen in einem gegebenen Abstand zueinander. Dadurch entsteht bei einer Verformung der funktionellen Struktur 10f eine gewisse Spannung in den konkav ausladenden Rippen. Diese Spannung kann als Rückstellkraft für die Rückenlehne genutzt werden.

Bei dem Ausführungsbeispiel gemäss Figuren 30 bis 32 sind die Rippen 16 durch Drähte gebildet, welche in einem Schaumkörper 77 eingebettet sind. Der Schaum gibt der Verformung der Rippen 16 elastisch nach und bewirkt dadurch ebenfalls eine Rückstellkraft für die Rückenlehne.

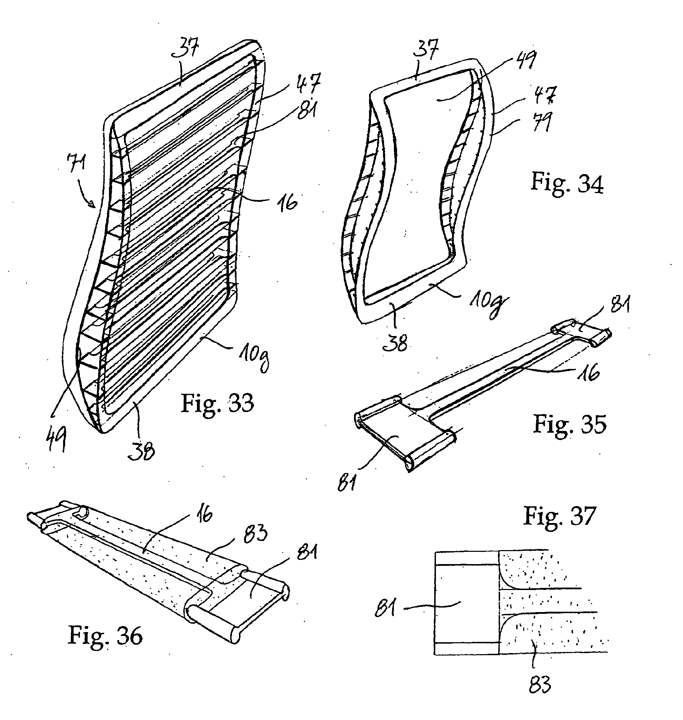

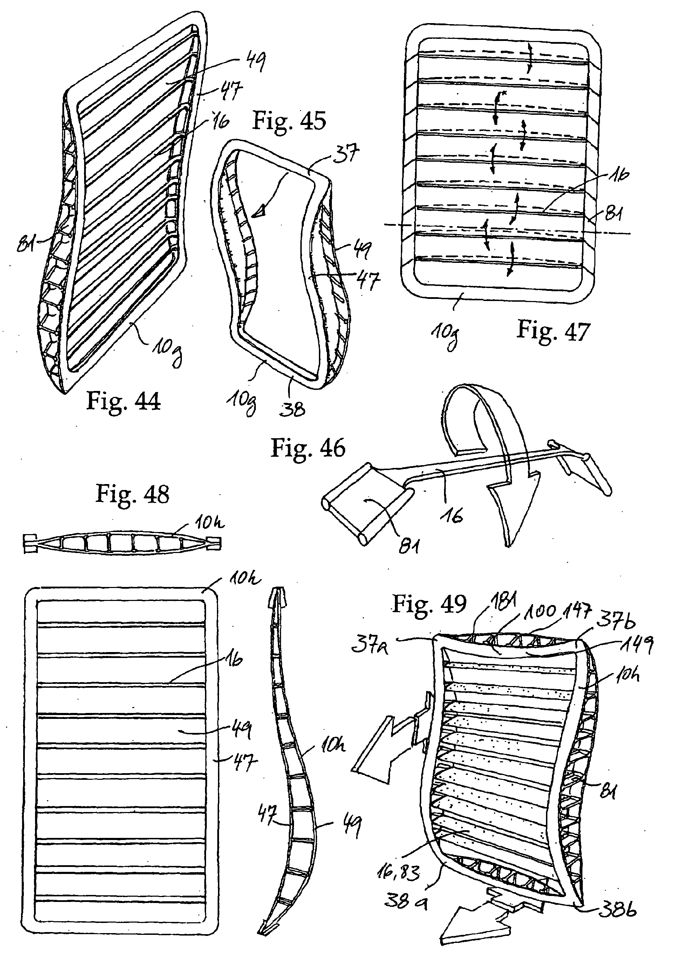

Bei den Ausführungsbeispielen gemäss Figuren 33 bis 37 und 44 bis 47 ist die funktionelle Struktur 10g in zwei seitlichen Rahmenteilen 79 ausgebildet. Die Abstandmittel sind durch kurze Abstandlamellen 81 gebildet, welche gegenüber dem Druckelement 47 und dem Zugelement 49 verkippbar daran befestigt sind. Jeweils zwei Abstandlamellen 81 sind an einer Rippe 16 ausgebildet und in Figuren 33 bis 37 zueinander axial ausgerichtet. Die Rippe 16 verbindet die linksseitige Struktur 79,81 mit der rechtsseitigen Struktur 79,81 . Die Rippe 16 ist in Figur 36 mit einem Polsterkörper 83 umhüllt, der den mittleren Bereich der Stützfläche 71 elastisch stützt. In den Figuren 44 bis 47 sind die Abstandlamellen 81 nicht axial zueinander ausgerichtet. Die Verkippachsen beider an einer Rippe 16 angeordneten Abstandlamellen 81 sind in einem Winkel von ca. 120 bis 140 Grad zueinander gerichtet. Dadurch ergibt sich bei einer Verkippung der Lamellen 81 in Folge einer an die Stützfläche 71 drückenden Kraft eine Verwindung der Rippe 16. Die in der Verwindung gespeicherte Kraft kann als Rückstellkraft für die Rückenlehne genutzt werden. Die Verwindung kann derart vorgesehen werden, dass sich die Rückenlehne in einem Horizontalschnitt konkav verformt.

In den Figuren 48 und 49 ist eine Rückenlehne dargestellt, bei der eine beschriebene funktionelle Struktur 10 jeweils horinzontal und vertikal in einem Rahmen 10h integriert ist. Dadurch dass an den Eckpunkten das Druckelement 47 und das Zugelement 49 bezüglich allen Richtungen unverschieblich miteinander verbunden sind, kann die horizontale wie auch die vertikale Struktur 10 ihre Kinematik entwickeln. Die Stützfläche 71 ist ein nicht dargestelltes, über den Rahmen 10h gespanntes elastisches Gewebe, das die Bewegungen in beide Richtungen mitmacht. Die Rückenlehne kann auch in horizontaler Richtung konkav vorgeformt sein.

Der Rahmen kann auch mit durchwegs gleich breiten Lamellen 81 als Abstandmittel versehen sein. An den Fixpunkten, hier in den Ecken, kann das Druck- und das Zugelement in Abstand zueinander angeordnet sein, solange eine Verschiebung von Druck- und Zugelement gegeneinander in Richtung der Längserstreckung der Struktur 10 verhindert ist. Eine solche Verschiebung kann bereits dadurch verhindert sein, dass die Abstandlamellen 81 nicht verschieblich und nicht verschwenkbar an Druckelement 47 und Zugelement 49 angeordnet sind. Da sie eine gewisse Länge aufweise, ist auch einer Verschiebung unter gleichzeitiger Verformung der Abstandlamellen 81 in dieser Längsrichtung ein grosser Widerstand entgegengesetzt.

Die dargestellte Anordnung von jeweils zwei der seitlichen Abstandlamellen 81 auf einer gemeinsamen Rippe 16 ist nicht unbedingt erforderlich.

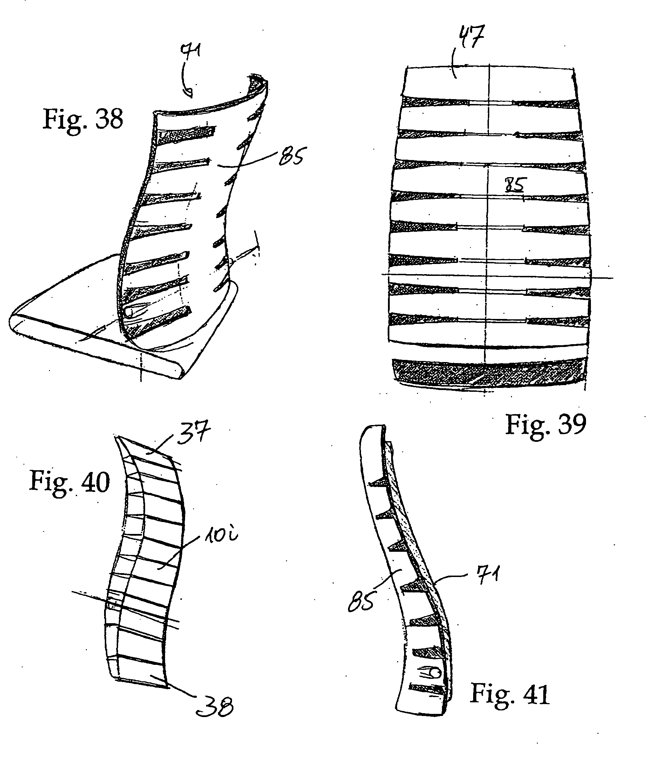

Bei dem Ausführungsbeispiel gemäss Figuren 38 bis 41 ist die funktionelle Struktur 10i mit einer rückseitigen Verkleidung 85 verbunden. Diese Verkleidung ist zur Seite hin fingerartig aufgefächert und in diesem Bereich konkav gegen die Stützfläche 71 gewölbt. Dadurch kann eine auch in einem horizontalen Schnitt gewölbte Rückenlehne geschaffen werden. Die Verkleidung übernimmt die Funktion der Rippen 16 in den Beispielen gemäss Figuren 28 bis 32.

## Patentansprüche

1. Lehne mit einer Stützfläche (71),
- wenigstens einer mit der Stützfläche (71) verbundenen oder die Stützfläche (71) bildenden Struktur (10), welche Struktur (10) sich in Richtung der Höhe der Lehne von einem ersten Endbereich (37) der Stützfläche (71) zu einem zweiten Endbereich (38) der Stützfläche (71) erstreckt und vorderseitig ein Zugelement (49) und rückseitig ein Druckelement (47) aufweist,
- wobei das Zugelement (49) den ersten Endbereich (37) der Stützfläche (71) mit dem zweiten Endbereich (38) der Stützfläche (71) Zugkräfte übertragend verbindet, und
- das Druckelement (47) zwischen dem ersten Endbereich (37) und dem zweiten Endbereich (38) in einem Abstand zum Zugelement (49) angeordnet ist und Druckkräfte aufnehmen kann,
- das Druckelement (47) wenigstens im ersten Endbereich (37) der Stützfläche (71) in Erstreckungsrichtung unverschieblich mit dem Zugelement (49) verbunden ist,
- und das Zugelement (49) und das Druckelement (47) zwischen den Endbereichen (37,38) vermittels den Abstand haltenden Abstandmitteln (14, 81) in Erstreckungsrichtung gegeneinander verschieblich und miteinander verbunden sind,
- und die Lehne wenigstens ein Befestigungselement (28, 43), insbesondere eine Tragachse (43) aufweist, mit welcher oder welchen sie an einen Lehnenträger befestigbar oder angeordnet ist, insbesondere anlenkbar oder angelenkt ist,
**dadurch gekennzeichnet, dass**
- das Druckelement (47) im zweiten Endbereich (38) der Stützfläche (71) in Erstreckungsrichtung unverschieblich mit dem Zugelement (49) verbunden ist, und
- das Befestigungselement (28, 43) mit Abstand zum ersten Endbereich (37) und zum zweiten Endbereich (38) der Stützfläche (71) zwischen diesen Endbereichen (37, 38) angeordnet ist.

2. Lehne nach Anspruch 1, **dadurch gekennzeichnet, dass** die Abstandmittel (14,81) gegenüber dem Zugelement (49) und dem Druckelement (47) verkippbar sind.

3. Lehne nach Anspruch 1 oder 2, **dadurch gekennzeichnet, dass** das Befestigungselement (28,43) derart mit dem Zugelement (49) und/oder dem Druckelement (47) verbunden ist, dass diese Verbindung eine Verschiebung des Zugelements (49) gegenüber dem Druckelement (47) im Bereich des Befestigungselements (28,43) zulässt.

4. Lehne nach einem der vorangehenden Ansprüche, **dadurch gekennzeichnet, dass** die Abstandmittel (14,81) zusammen mit Zugelement (49) und Druckelement (47) in einem Schnitt in Erstreckungsrichtung eine Vieleckstruktur bilden, insbesondere eine Viereckstruktur, bei welcher Vieleckstruktur durch Belastung die Winkel der Vielecke veränderbar, insbesondere parallelogrammartig veränderbar, und/oder die Seiten der Vielecke verformbar sind.

5. Lehne nach einem der vorangehenden Ansprüche, **dadurch gekennzeichnet, dass** das Zugelement (49) und das Druckelement (47) in einem mittleren Bereich in einem grösseren Abstand voneinander gehalten sind als angrenzend an die beiden Endbereiche (37,38).

6. Lehne nach einem der vorangehenden Ansprüche, **dadurch gekennzeichnet, dass** das Zugelement (49) und das Druckelement(47)
- im Bereich des Befestigungselements (28,43) steifer und
- zwischen den Endbereichen (37,38) und dem Befestigungselement (28,43) weniger steif miteinander verbunden sind.

7. Lehne nach einem der vorangehenden Ansprüche, **dadurch gekennzeichnet, dass** das Zugelement (49) und das Druckelement (47) Teil eines flexiblen Kunststoffprofils (10) sind, welches Kunststoffprofil eine Mehrzahl von horizontal in der Lehne angeordneten Kanälen (12) aufweist, deren Querschnitte bei Belastung sich einzeln parallelogrammartig unter gleichzeitiger Verformung benachbarter Kanäle (12) verformen.

8. Lehne nach einem der vorangehenden Ansprüche, **dadurch gekennzeichnet, dass** die Stützfläche (71), z.B. um eine horizontale Achse (43) oder zwei zueinander geneigte Achsen, unterhalb ihrer vertikalen Mitte und oberhalb des unteren, zweiten Endbereichs (38) gelagert ist.

9. Lehne nach einem der vorangehenden Ansprüche, **dadurch gekennzeichnet, dass** mit dem Druckelement (47), dem Zugelement (49) und/oder den Abstandmitteln (14) senkrecht zur Erstreckungsrichtung gerichtete Versteifungsstreifen (16,19) verbunden sind.

10. Lehne nach Anspruch 9, **dadurch gekennzeichnet, dass** die Versteifungsstreifen (16) flache Kunststoffstreifen sind, die in Führungen (26) eingelassen sind, die in die Kammern (12) trennenden Lamellen (14) vorhanden sind.

11. Lehne nach Anspruch 9, **dadurch gekennzeichnet, dass** die Versteifungsstreifen (19) eine um die Biegeachsen bewegliche, rückseitige Verkleidung (18) der Lehne bilden.

12. Lehne nach Anspruch 11, **dadurch gekennzeichnet, dass** die Verkleidung (18) mittels elastischen Zungen (22), insbesondere Gummizungen, welche in entsprechenden Nuten (24) im Druckelement (47) eingreifen, am Druckelement (47) befestigt sind.

13. Lehne nach einem der vorangehenden Ansprüche, **dadurch gekennzeichnet, dass** die Struktur (10) lediglich in einem mittleren Bereich ausgebildet ist, und seitlich neben diesem mittleren Bereich liegende Bereiche der Stützfläche (71) mittels parallel zu den Biegeachsen verlaufenden Versteifungsstreifen (16,19) abgestützt sind.

14. Lehne nach Anspruch 13, **dadurch gekennzeichnet, dass** mehrere Versteifungsstreifen (16) an den Abstandmitteln (14) befestigt sind.

15. Lehne nach Anspruch 13, **dadurch gekennzeichnet, dass** mehrere Versteifungsstreifen (19) am Druckelement (47) befestigt sind.

16. Lehne nach Anspruch 13, **dadurch gekennzeichnet, dass** mehrere Versteifungsstreifen (16) an ihren äusseren Enden mit der Stützfläche (71) oder einem Rahmen (75) um die Stützfläche (71) verbunden sind.

17. Lehne nach einem der Ansprüche 13 bis 16, **dadurch gekennzeichnet, dass** mehrere Versteifungsstreifen (16) in einen Polsterkörper (77) eingebunden sind.

18. Lehne nach einem der vorangehenden Ansprüche, **dadurch gekennzeichnet, dass** an wenigstens zwei voneinander beabstandeten Stellen der Lehne voneinander unterscheidbare Strukturen (10) vorhanden sind, wobei jede dieser Strukturen (10) ein Zugelement (49), ein Druckelement (47) und Abstandmittel (81) umfasst.

19. Lehne nach Anspruch 18, **dadurch gekennzeichnet, dass** die Abstandmittel (81) dieser unterscheidbaren Strukturen (10) miteinander verbunden sind.

20. Lehne nach Anspruch 18 oder 19, **dadurch gekennzeichnet, dass** die Biegeachsen der einen Struktur (10) von einer Parallelen zu den Biegeachsen der zweiten Struktur (10) abweichen.

21. Lehne nach Anspruch 20, **dadurch gekennzeichnet, dass** die Biegeachsen in einem Schnitt quer zur Erstreckungsrichtung in einem von 0 und 180 Grad abweichenden Winkel zueinander stehen.

22. Lehne nach Anspruch 20 oder 21, **dadurch gekennzeichnet, dass** die Biegeachsen in einem Schnitt parallel zur Stützfläche 71 in einem von 0 und 180 Grad abweichenden Winkel zueinander stehen.

23. Lehne nach einem der Ansprüche 20 bis 22, **dadurch gekennzeichnet, dass** die Biegeachsen in einem von 90 Grad abweichenden Winkel zur Erstreckungsrichtung stehen.

24. Lehne nach einem der vorangehenden Ansprüche, **dadurch gekennzeichnet, dass** Zugelement (49), Druckelement (47) einen Raum (12) mediumdicht umschliessen und mit einem Einlass für ein Medium ausgerüstet sind.

25. Lehne nach einem der vorangehenden Ansprüche, **dadurch gekennzeichnet, dass** die Abstandmittel (51) lediglich einer Zugbelastung Widerstand leisten.

26. Lehne nach einem der vorangehenden Ansprüche, **dadurch gekennzeichnet, dass** die Abstandmittel (55) durch ein im Querschnitt wabenförmige Kanäle aufweisendes Wabenprofil gebildet sind.

27. Lehne nach einem der vorangehenden Ansprüche, **dadurch gekennzeichnet, dass** die Abstandmittel durch an das Zugelement (49) und das Druckelement (47) angelenkte, langgestreckte Lamellen (51) gebildet sind.

28. Lehne nach Anspruch 27, **dadurch gekennzeichnet, dass** die Lamellen (51) in gegeneinander versetzten Reihen angeordnet sind.

29. Lehne nach einem der vorangehenden Ansprüche, **dadurch gekennzeichnet, dass** die Abstandmittel Seitenwände eines im Querschnitt viereckigen Profils (63) oder Kanals sind.

30. Lehne nach Anspruch 29, **dadurch gekennzeichnet, dass** das Zugelement (49) und das Druckelement (47) zusammengesetzt sind aus eine Mehrzahl von viereckigen Profilen (63), die seitlich aneinander gereiht und flexibel miteinander verbunden sind.

31. Lehne nach einem der vorangehenden Ansprüche, **dadurch gekennzeichnet, dass** die Abstandmittel (73) stiftförmig ausgebildet sind.

32. Lehne nach Anspruch 31, **dadurch gekennzeichnet, dass** die Abstandmittel (73) kugelgelenkig mit dem Zugelement (49) und dem Druckelement (47) verbunden sind.

33. Lehne nach einem der vorangehenden Ansprüche, **dadurch gekennzeichnet, dass** die Abstandmittel durch Elemente (69) gebildet sind, welche sich einer ebenflächigen Kurve entlang erstrecken.

34. Lehne nach einem der vorangehenden Ansprüche, **dadurch gekennzeichnet, dass** die Abstandmittel durch Elemente gebildet sind, welche sich einer räumlich gebogenen Kurve entlang erstrecken.

35. Lehne nach einem der vorangehenden Ansprüche, bei welcher sich eine Querstruktur (100) quer zur Erstreckungsrichtung in die Breite der Lehne ausbreitet, welche Querstruktur (100) um Biegeachsen quer zur Ausbreitungsrichtung verbiegbar ist, auf der Vorderseite ein Zugelement (149), auf der Rückseite ein Druckelement (147) aufweist, welche an zwei Stellen unverschieblich miteinander verbunden sind, und dazwischen mit Abstandmitteln (181) in Richtung der Ausbreitungsrichtung verschieblich miteinander verbunden sind.

36. Lehne nach Anspruch 35, **dadurch gekennzeichnet, dass** die Zugelemente (49, 149) der sich ausbreitenden Strukturen (100) und der sich quer dazu erstreckenden Strukturen (10) eine Einheit bilden.

37. Lehne nach Anspruch 35 oder 36, **dadurch gekennzeichnet, dass** die Druckelemente (47,147) der sich ausbreitenden Strukturen (100) und der sich quer dazu erstreckenden Strukturen (10) eine Einheit bilden.

38. Lehne nach einem der Ansprüche 35 bis 37, **dadurch gekennzeichnet, dass** die Zugelemente (49,149), bzw. Druckelemente (47,147), einen die Stützfläche (71) umrandenden Rahmen bilden.

39. Lehne nach Anspruch 38, **dadurch gekennzeichnet, dass** die Abstandmittel (181) das Druckelement (147) und das Zugelement (149) in einer ersten Richtung unverschieblich und in einer dazu quer liegenden zweiten Richtung verschieblich miteinander verbinden.

40. Stuhl oder Fahrzeugsitz mit einer Rückenlehne nach einem der Ansprüche 1 bis 39.

41. Stuhl oder Fahrzeugsitz gemäss Anspruch 40, **dadurch gekennzeichnet, dass** die Lehne ein Kunststoffprofil (10) mit einer Mehrzahl von Kammern (12) aufweist, die sich horizontal erstreckend in der Lehne angeordnet sind, wobei die Lehne mit denn Stuhlgestell um eine horizontale Achse (43) unterhalb der vertikalen Mitte der Lehne, vom unteren Ende (38) der Lehne jedoch beabstandet, gelagert ist.

42. Stuhl oder Fahrzeugsitz nach Anspruch 40 oder 41, **dadurch gekennzeichnet, dass** im Wesentlichen horizontal angeordnete Versteifungsstreifen (16,19) vorgesehen sind.

43. Stuhl oder Fahrzeugsitz nach Anspruch 41, **dadurch gekennzeichnet, dass** die Versteifungsstreifen (16) flache Kunststoffstreifen sind, die in entsprechenden in den Kammern (12) vorgesehenen Führungen (16) horizontal liegend angeordnet sind.

44. Stuhl oder Fahrzeugsitz nach einem der vorangehenden Ansprüche, **gekennzeichnet durch** eine aus Kunststofflamellen (19) ausgeführte, in sich um eine Mehrzahl von horizontalen Kippachsen bewegliche, rückseitige Verkleidung (18) der Lehne, die über in entsprechende Nuten (24) eingreifende Gummizungen (22) an der Struktur (10) angesetzt ist.

45. Stuhl oder Fahrzeugsitz nach einem der Ansprüche 40 bis 44, **dadurch gekennzeichnet, dass** die Rückenlehne oder die sich in Richtung der Höhe der Rückenlehne erstreckenden Struktur (10) entgegen einer Federkraft um die Tragachse (43) verschenkbar ausgebildet ist.

## Claims

1. Seat-back with a support area (71),
at least one structure (10), connected to the support area (71) or forming the support area (71), which structure (10) extends towards the top of the seat-back from a first end region (37) of the support area (71) to a second end region (38) of the support area (71) and at the front exhibits a tension element (49) and at the rear a pressure element (47),
- whereby the tension element (49) connects the first end region (37) of the support area (71) to the second end region (38) of the support area (71) transmitting tensile forces, and
- the pressure element (47) between the first end region (37) and the second end region (38) is arranged at a distance from the tension element (49) and can absorb thrust forces,
- the pressure element (47) at least in the first end region (37) of the support area (71) is in the extension direction non-displaceably connected to the tension element (49),
- and the tension element (49) and the pressure element (47) between the end regions (37, 38) are connected to one another by means of the spacers keeping the distance (14, 81) and in the extension direction displaceably against each other,
- and the seat-back has at least one mounting element (28, 43), in particular a bearing axis (43), with which it can be mounted or is arranged on, in particular can be joined or is joined to a seat-back bracket
**characterized in that**
- the pressure element (47) in the second end region (38) of the support area (71) is in the extension direction non-displaceably connected to the tension element (49), and
- the mounting element (28, 43) is arranged at a distance from the first end region (37) and from the second end region (38) of the support area (71) between these end regions (37, 38).

2. Seat-back according to Claim 1, **characterized in that** the spacers (14,81) can be tilted relative to the tension element (49) and the pressure element (47).

3. Seat-back according to Claim 1 or 2, **characterized in that** the mounting element (28, 43) is connected to the tension element (49) and/or the pressure element (47) in such a manner that this connection permits displacement of the tension element (49) relative to the pressure element (47) in the region of the mounting element (28, 43).

4. Seat-back according to any one of the preceding claims, **characterized in that** the spacers (14, 81) together with tension element (49) and pressure element (47) in a line in the linear direction form a polygon structure, in particular a quadrangular structure, with which polygon structure the angles of the polygon can be changed, in particular can be changed like a parallelogram, and/or the sides of the polygon can be deformed by loading.

5. Seat-back according to any one of the preceding claims, **characterized in that** the tension element (49) and the pressure element (47 are kept at a greater distance from one another) in a central region than bordering on the two end regions (37, 38).

6. Seat-back according to any one of the preceding claims, **characterized in that** the tension element (49) and the pressure element (47)
- in the region of the mounting element (28, 43) are connected more stiffly and
- between the end regions (37, 38) and the mounting element (28, 43) are connected less stiffly.

7. Seat-back according to any one of the preceding claims, **characterized in that** the tension element (49) and the pressure element (47) are part of a flexible plastic profile (10), which plastic profile has a plurality of channels (12) horizontally arranged in the seat-back, whose cross sections when loaded deform individually like a parallelogram with simultaneous deformation of adjacent channels (12).

8. Seat-back according to any one of the preceding claims, **characterized in that** the support area (71) is mounted for example around a horizontal axis (43) or two axes inclined to one another, below their vertical centre and above the lower, second end region (3 8).

9. Seat-back according to any one of the preceding claims, **characterized in that** reinforcement strips (16, 19) are connected to the pressure element (47), the tension element (49) and/or the spacers (14) aligned perpendicularly to the extension direction.

10. Seat-back according to Claim 9, **characterized in that** the reinforcement strips (16) are flat plastic strips, which are inserted in guides (26), that are present in lamellas (14) separating the chambers (12).

11. Seat-back according to Claim 9, **characterized in that** the reinforcement strips (19) form a rear lining (18) of the seat-back movable around the neutral axes.

12. Seat-back according to Claim 11, **characterized in that** the lining (18) is attached to the pressure element (47) by means of flexible tongues (22), in particular rubber tongues, which engage into corresponding grooves (24) in the pressure element (47).

13. Seat-back according to any one of the preceding claims, **characterized in that** the structure (10) is formed in a central region only, and regions of the support area (71) lying laterally near this central region are supported by means of reinforcement strips (16,19) running parallel to the neutral axes.

14. Seat-back according to Claim 13, **characterized in that** several reinforcement strips (16) are fixed to the spacers (14).

15. Seat-back according to Claim 13, **characterized in that** several reinforcement strips (19) are fixed to the pressure element (47).

16. Seat-back according to Claim 13, **characterized in that** several reinforcement strips (16) at their outside ends are connected to the support area (71) or a frame (75) around the support area (71).

17. Seat-back according to any one of Claims 13 to 16, **characterized in that** several reinforcement strips (16) are embedded in upholstered padding (77).

18. Seat-back according to any one of the preceding claims, **characterized in that** structures (10) which are distinguishable from one another are present in at least two places of the seat-back at a distance from one another, whereby each of these structures (10) comprises a tension element (49), a pressure element (47) and spacers (81).

19. Seat-back according to Claim 18, **characterized in that** the spacers (81) of these distinguishable structures (10) are connected to one another.

20. Seat-back according to Claim 18 or 19, **characterized in that** the neutral axes of the one structure (10) deviate from a parallel to the neutral axes of the second structure (10).

21. Seat-back according to Claim 20, **characterized in that** the neutral axes in a line diagonal to the extension direction stand at an angle deviating by 0 and 180 degrees to one another.

22. Seat-back according to Claim 20 or 21, **characterized in that** the neutral axes in a line parallel to the support area 71 stand at an angle deviating by 0 and 180 degrees to one another.

23. Seat-back according to any one of Claims 20 to 22, **characterized in that** the neutral axes stand at an angle deviating by 90 degrees to the extension direction.

24. Seat-back according to any one of the preceding claims, **characterized in that** the tension element (49), pressure element (47) enclose a leak-proof space (12) and are equipped with an inlet for a medium.

25. Seat-back according to any one of the preceding claims, **characterized in that** the spacers (51) only offer resistance to tensile force.

26. Seat-back according to any one of the preceding claims, **characterized in that** the spacers (55) are formed by a honeycombed profile having channels with a honeycombed cross section.

27. Seat-back according to any one of the preceding claims, **characterized in that** the spacers are formed by elongated lamellas (51) joined to the tension element (49) and the pressure element (47).

28. Seat-back according to Claim 27, **characterized in that** the lamellas (51) are arranged in rows in zig-zag fashion side by side.

29. Seat-back according to any one of the preceding claims, **characterized in that** the spacers are sidewalls of a profile (63) or channel with a quadrangular cross section.

30. Seat-back according to Claim 29, **characterized in that** the tension element (49) and the pressure element (47) are constructed from a plurality of quadrangular profiles (63), which are arranged in rows side by side and flexibly connected to one another.

31. Seat-back according to any one of the preceding claims, **characterized in that** the spacers (73) are pin-shaped.

32. Seat-back according to Claim 31, **characterized in that** the spacers (73) are connected with ball and socket joints to the tension element (49) and the pressure element (47).

33. Seat-back according to any one of the preceding claims, **characterized in that** the spacers are formed by elements (69), which extend along an even-faced curve.

34. Seat-back according to any one of the preceding claims, **characterized in that** the spacers are formed by elements, which extend along a dimensionally inclined curve.

35. Seat-back according to any one of the preceding claims, wherein a transverse structure (100) expands diagonally to the extension direction into the width of the seat-back, which transverse structure (100) can be deformed around neutral axes diagonally to the expansion direction, on the front has a tension element (149), on the rear a pressure element (147), which are non-displaceably connected at two places, and between them are in the expansion direction displaceably connected to one another with spacer means (181).

36. Seat-back according to Claim 35, **characterized in that** the tension elements (49, 149) of the expanding structures (100) and the structures (10) extending diagonally thereto form a unit.

37. Seat-back according to Claim 35 or 36, **characterized in that** the pressure elements (47,147) of the expanding structures (100) and of the structures (10) extending diagonally thereto form a unit.

38. Seat-back according to any one of Claims 35 to 37, **characterized in that** the tension elements (49,149), and/or pressure elements (47,147) form a frame bordering the support area (71).

39. Seat-back according to Claim 38, **characterized in that** the spacers (181), the pressure element (147) and the tension element (149) are in a first direction non-displaceably connected and are in a second direction lying diagonally thereto displaceably connected to one another.

40. Chair or vehicle seat with a backrest according to any one of Claims 1 to 39.

41. Chair or vehicle seat according to Claim 40, **characterized in that** the seat-back exhibits a plastic profile (10) with a plurality of chambers (12), which are horizontally arranged extending into the seat-back, whereby the seat-back with the chair frame is mounted around a horizontal axis (43) below the vertical centre of the seat-back, however ar a distance from the lower end of (38) of the seat-back.

42. Chair or vehicle seat according to Claim 40 or 41, **characterized in that** substantially horizontally arranged reinforcement strips (16, 19) are provided.

43. Chair or vehicle seat according to Claim 41, **characterized in that** the reinforcement strips (16) are flat plastic strips, which are arranged lying horizontally in corresponding guides (16) provided in the chambers (12).

44. Chair or vehicle seat according to any one of the preceding claims, **characterized by** a rear lining (18) of the seat-back constructed from plastic lamellas (19), movable in itself around a plurality of horizontally tilting axes, which is attached to the structure (10) by means of rubber tongues (22) engaging into corresponding slots (24).

45. Chair or vehicle seat according to any one of Claims 40 to 44, **characterized in that** the backrest or the structure (10) extending towards the top of the backrest is formed against a bias action pivotally around the bearing axis (43).

## Revendications

1. Dossier avec une surface d'appui (71)
- au moins une structure (10) qui est reliée à la surface d'appui (71) ou qui forme la surface d'appui (71), laquelle structure (10) s'étend en direction de la hauteur du dossier d'une première zone d'extrémité (37) de la surface d'appui (71) à une seconde zone d'extrémité (38) de la surface d'appui (71) et qui présente, sur le côté avant, un élément de traction (49) et sur le côté arrière un élément de pression (47),
- l'élément de traction (49) reliant la première zone d'extrémité (37) de la surface d'appui (71) à la seconde zone d'extrémité (38) de la surface d'appui (71) en transmettant des forces de traction et
- l'élément de pression (47) étant placé entre la première zone d'extrémité (37) et la seconde zone d'extrémité (38) à une distance de l'élément de traction (49) et pouvant absorber des forces de pression,
- l'élément de pression (47) étant relié à l'élément de traction (49) au moins dans la première zone d'extrémité (37) de la surface d'appui (71) dans le sens d'extension sans être translatable
- et l'élément de traction (49) et l'élément de pression (47) étant translatables en sens opposé dans le sens d'extension entre les zones d'extrémité (37, 38) au moyen de moyens d'espacement (14, 81) qui maintiennent l'espacement, et étant reliés l'un à l'autre
- et le dossier présentant au moins un élément de fixation (28, 43), en particulier un axe porteur (43), avec lequel il peut être fixé ou est placé sur un support de dossier, en particulier avec lequel il peut être articulé ou est articulé,
**caractérisé en ce que**
- l'élément de pression (47) est relié à l'élément de traction (49) dans la seconde zone d'extrémité (38) de la surface d'appui (71) dans le sens d'extension sans être translatable et
- l'élément de fixation (28, 43) est placé espacé de la première zone d'extrémité (37) et de la seconde zone d'extrémité (38) de la surface d'appui (71) entre ces zones d'extrémité (37, 38).

2. Dossier selon la revendication 1, **caractérisé en ce que** les moyens d'espacement (14, 81) peuvent basculer par rapport à l'élément de traction (49) et l'élément de pression (47).

3. Dossier selon la revendication 1 ou 2, **caractérisé en ce que** le moyen de fixation (28, 43) est relié à l'élément de traction (49) et/ou à l'élément de pression (47) de telle manière que cette jonction permet une translation de élément de traction (49) par rapport à l'élément de pression (47) dans la zone de l'élément de fixation (28, 43).

4. Dossier selon l'une des revendications précédentes, **caractérisé en ce que** les moyens d'espacement (14, 81) forment ensemble avec le moyen de traction (49) et l'élément de pression (47) une structure polygonale dans une coupe dans le sens de l'extension, en particulier une structure quadrangulaire, structure polygonale pour laquelle les angles des polygones peuvent être modifiés par sollicitation, en particulier peuvent être modifiés de type parallélogramme et/ou les côtés des polygones peuvent être déformés.

5. Dossier selon l'une des revendications précédentes, **caractérisé en ce que** l'élément de traction (49) et élément de pression (47) sont maintenus dans une zone centrale à un écart plus grand l'un de l'autre qu'au voisinage des deux zones d'extrémité (37, 38).

6. Dossier selon l'une des revendications précédentes, **caractérisé en ce que** l'élément de traction (49) et l'élément de pression (47)
- sont reliés l'un à l'autre de manière plus rigide dans la zone de élément de fixation (28, 43) et
- de manière moins rigide entre les zones d'extrémité (37, 38) et l'élément de fixation (28, 43).

7. Dossier selon l'une des revendications précédentes, **caractérisé en ce que** l'élément de traction (49) et élément de pression (47) sont une partie d'un profilé plastique flexible (10), lequel profilé plastique présente une multitude de canaux (12), placés horizontalement dans le dossier, dont les sections se déforment, lors d'une sollicitation, individuellement à la manière d'un parallélogramme avec une déformation simultanée des canaux voisins (12).

8. Dossier selon l'une des revendications précédentes, **caractérisé en ce que** la surface d'appui (71) est positionnée par exemple autour d'un axe horizontal (43) ou de deux axes inclinés l'un vers l'autre, au-dessous de son milieu vertical ou au-dessus de la seconde zone d'extrémité inférieure (38).

9. Dossier selon l'une des revendications précédentes, **caractérisé en ce que** des bandes de renforcement (16, 19) orientées perpendiculairement au sens d'extension sont reliées à l'élément de pression (47), à l'élément de traction (49) et/ou aux moyens d'espacement (14).

10. Dossier selon la revendication 9, **caractérisé en ce que** les bandes de renforcement (16) sont des bandes plates en plastique qui sont encastrées dans des guidages (26) qui existent dans des lamelles (14) qui séparent les compartiments (12).

11. Dossier selon l'une des revendications précédentes, **caractérisé en ce que** des bandes de renforcement (19) forment un habillage situé sur l'arrière (18) du dossier qui est mobile autour des axes de flexion.

12. Dossier selon la revendication 11, **caractérisé en ce que** l'habillage (18) est fixé sur l'élément de pression (47) au moyen de languettes élastiques (22), en particulier de languettes en caoutchouc, qui s'engrènent dans des rainures correspondantes (24) dans l'élément de pression (47).

13. Dossier selon l'une des revendications précédentes, **caractérisé en ce que** la structure (10) est configurée seulement dans une zone centrale et que des zones de la surface d'appui (71) situées latéralement à côté de cette zone centrale sont étayées au moyen de bandes de renforcement (16, 19) parallèles aux axes de flexion.

14. Dossier selon la revendication 13, **caractérisé en ce que** plusieurs bandes de renforcement (16) sont fixées sur les moyens d'espacement (14).

15. Dossier selon la revendication 13, **caractérisé en ce que** plusieurs bandes de renforcement (19) sont fixées sur l'élément de pression (47).

16. Dossier selon la revendication 13, **caractérisé en ce que** plusieurs bandes de renforcement (16) sont reliées à leurs extrémités extérieures à la surface d'appui (71) ou à un cadre (75) autour de la surface d'appui (71).

17. Dossier selon l'une des revendications 13 à 16, **caractérisé en ce que** plusieurs bandes de renforcement (16) sont intégrées dans un corps de rembourrage (77).

18. Dossier selon l'une des revendications précédentes, **caractérisé en ce qu'**il existe des structures (10) qui peuvent être distinguées l'une de l'autre à au moins deux endroits espacés l'un de l'autre du dossier, chacune de ces structures (10) comportant un élément de traction (49), un élément de pression (47) et des moyens d'espacement (81).

19. Dossier selon la revendication 18, **caractérisé en ce que** les moyens d'espacement (81) de ces structures qui peuvent être distinguées (10) sont reliés l'un à l'autre.

20. Dossier selon la revendication 18 ou 19, **caractérisé en ce que** les axes de flexion de l'une des structures (10) diffèrent d'une parallèle aux axes de flexion de la seconde structure (10).

21. Dossier selon la revendication 20, **caractérisé en ce que** les axes de flexion sont, dans une coupe transversalement par rapport au sens d'extension, dans un angle qui diffère de 0 et 180 degrés.

22. Dossier selon la revendication 20 ou 21, **caractérisé en ce que** les axes de flexion sont, dans une coupe parallèlement à la surface d'appui 71, dans un angle qui diffère de 0 et de 180 degrés.

23. Dossier selon l'une des revendications 20 à 22, **caractérisé en ce que** les axes de flexion sont dans un angle qui diffère de 90 degrés par rapport au sens d'extension.

24. Dossier selon l'une des revendications précédentes, **caractérisé en ce que** l'élément de traction (49) et l'élément de pression (47) enferment un espace (12) étanche aux fluides et sont équipés d'une entrée pour un fluide.

25. Dossier selon l'une des revendications précédentes, **caractérisé en ce que** les moyens d'espacement (51) n'exercent de résistance qu'à une charge de traction.

26. Dossier selon l'une des revendications précédentes, **caractérisé en ce que** les moyens d'espacement (55) sont formés par un profil de nid d'abeille qui présente des canaux de section alvéolé.

27. Dossier selon l'une des revendications précédentes, **caractérisé en ce que** les moyens d'espacement sont formés par des lamelles (51) allongées articulées sur élément de traction (49) et l'élément de pression (47).

28. Dossier selon la revendication 27, **caractérisé en ce que** les lamelles (51) sont placées dans des rangées décalées l'une par rapport à l'autre.

29. Dossier selon l'une des revendications précédentes, **caractérisé en ce que** les moyens d'espacement sont des parois latérales d'un profilé (63) ou d'un canal de section carrée.

30. Dossier selon la revendication 29, **caractérisé en ce que** l'élément de traction (49) et l'élément de pression (47) sont assemblés à partir d'une multitude de profilés carrés (63) qui sont en rangées latéralement l'un à côté de l'autre et qui sont reliés les uns aux autres.

31. Dossier selon l'une des revendications précédentes, **caractérisé en ce que** les moyens d'espacement (73) sont configurés en forme de chevilles.

32. Dossier selon la revendication 31, **caractérisé en ce que** les moyens d'espacement (73) sont reliés par un joint sphérique à l'élément de traction (49) et à l'élément de pression (47).

33. Dossier selon l'une des revendications précédentes, **caractérisé en ce que** les moyens d'espacement sont formés par des éléments (69) qui s'étendent le long d'une courbe à surface plane.

34. Dossier selon l'une des revendications précédentes, **caractérisé en ce que** les moyens d'espacement sont formés par des éléments qui s'étendent le long d'une courbe courbée dans l'espace.

35. Dossier selon l'une des revendications précédentes pour lequel une structure transversale (100) s'étale transversalement par rapport au sens d'extension dans la largeur du dossier, laquelle structure transversale (100) peut être fléchie autour d'axes de flexion transversalement par rapport au sens d'étalement, présente un élément de traction (149) sur le côté avant, un élément de pression (147) sur le côté arrière qui sont reliés l'un à l'autre de manière non translatable à deux endroits et qui sont reliés l'un à l'autre de manière translatable entre ces endroits avec des moyens d'espacement (181) dans le sens du sens d'étalement.

36. Dossier selon la revendication 35, **caractérisé en ce que** les éléments de traction (49, 149) des structures qui s'étalent (100) et des structures qui s'étendent transversalement par rapport à celles-ci (10) forment une unité.

37. Dossier selon la revendication 35 ou 36, **caractérisé en ce que** les éléments de pression (47, 147) des structures qui s'étalent (100) et des structures qui s'étendent transversalement par rapport à celles-ci (10) forment une unité.

38. Dossier selon l'une des revendications 35 à 37, **caractérisé en ce que** les éléments de traction (49, 149) ou les éléments de pression (47, 147) forment un cadre qui borde le tour de la surface d'appui (71).

39. Dossier selon la revendication 38, **caractérisé en ce que** les moyens d'espacement (181) relient l'élément de pression (147) et l'élément de traction (149) l'un à l'autre de manière non translatable dans un premier sens et de manière translatable dans un second sens transversal par rapport à celui-ci.

40. Chaise ou siège de véhicule avec un dossier selon l'une des revendications 1 à 39.

41. Chaise ou siège de véhicule selon la revendication 40, **caractérisée en ce que** le dossier présente un profilé en plastique (10) avec une multitude de compartiments (12) qui sont placés en s'étendant horizontalement dans le dossier, le dossier étant positionné avec le bâti de la chaise autour d'un axe horizontal (43) en dessous du milieu vertical du dossier en étant cependant espacé de l'extrémité inférieure (38) du dossier.

42. Chaise ou siège de véhicule selon la revendication 40 ou 41, **caractérisée en ce que** des bandes de renforcement (16, 19) placées substantiellement horizontalement sont prévues.

43. Chaise ou siège de véhicule selon la revendication 40 ou 41, **caractérisée en ce que** les bandes de renforcement (16) sont des bandes de plastique plates qui sont placés couchées horizontalement dans des guidages (16) prévus dans les compartiments (12).

44. Chaise ou siège de véhicule selon l'une des revendications précédentes, **caractérisée par** un habillage (18) sur le côté arrière du dossier, qui est configuré par des lamelles en plastique (19), qui est mobile en soi autour d'une multitude d'axes de basculement horizontaux, qui est rattaché à la structure (10) par des languettes de caoutchouc (22) qui s'engrènent dans des rainures correspondantes (24).

45. Chaise ou siège de véhicule selon l'une des revendications précédentes, **caractérisée en ce que** le dossier ou la structure (10) qui s'étend dans le sens de la hauteur du dossier est configurée pivotante autour de l'axe de support (43) à l'encontre d'une force de ressort.
